(19) Europäisches Patentamt
European Patent Office
Office européen des brevets

(11) **EP 2 203 967 B1**

(12) **FASCICULE DE BREVET EUROPEEN**

(45) Date de publication et mention de la délivrance du brevet:
**03.05.2017 Bulletin 2017/18**

(21) Numéro de dépôt: **08842073.2**

(22) Date de dépôt: **03.10.2008**

(51) Int Cl.:
**H02J 15/00** *(2006.01)*          **F01K 3/12** *(2006.01)*
**F28D 20/00** *(2006.01)*

(86) Numéro de dépôt international:
**PCT/FR2008/051794**

(87) Numéro de publication internationale:
**WO 2009/053593 (30.04.2009 Gazette 2009/18)**

(54) **INSTALLATION ET PROCEDES DE STOCKAGE ET RESTITUTION D'ENERGIE ELECTRIQUE A L'AIDE D'UNE UNITE DE COMPRESSION ET DETENTE DE GAZ A PISTONS**

VORRICHTUNG UND VERFAHREN ZUM SPEICHERN UND WIEDERNUTZBARMACHEN VON ELEKTRISCHER ENERGIE MIT HILFE EINER KOLBENMASCHINE ZUR GASKOMPRESSION UND -ENTSPANNUNG

INSTALLATION AND METHODS FOR STORING AND RESTORING ELECTRICAL ENERGY USING A PISTON-TYPE GAS COMPRESSION AND EXPANSION UNIT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.10.2007   FR 0758431**

(43) Date de publication de la demande:
**07.07.2010   Bulletin 2010/27**

(73) Titulaire: **Saipem SA**
**78180 Montigny-le-Bretonneux (FR)**

(72) Inventeur: **RUER, Jacques**
**F-78112 Fourqueux (FR)**

(74) Mandataire: **Domange, Maxime et al**
**Cabinet Beau de Lomenie**
**232, avenue du Prado**
**13295 Marseille Cedex 08 (FR)**

(56) Documents cités:
**EP-B- 0 003 980          WO-A-2006/072185**
**FR-A- 2 781 619          US-A- 4 094 148**
**US-A- 4 353 214          US-A1- 2006 218 924**

**Description**

La présente invention concerne une installation de stockage et restitution d'énergie électrique apte à stocker plusieurs dizaines, voire plusieurs centaines de MWh, ainsi que des procédés de stockage d'énergie électrique sous forme d'énergie thermique dans lequel on utilise une installation selon l'invention et un procédé de restitution d'une énergie électrique ($E_R$) à partir d'une énergie thermique stockée par un procédé selon l'invention.

La présente invention concerne le stockage d'énergie à haute température et plus particulièrement le stockage d'énergie électrique, en vue de la restituer sur le réseau électrique lors des pointes de consommation.

La production de courant électrique est réalisée en général par des centrales qui utilisent divers carburants pour produire l'énergie, tel le gaz, le pétrole, le charbon ou le lignite. Un autre moyen consiste à utiliser du combustible nucléaire pour produire de la chaleur qui sera alors transformée en énergie électrique dans des turbines à vapeur à haute pression.

On connaît aussi les énergies renouvelables qui participent pour une part très variable à la production d'électricité selon les pays. On peut citer entre autres l'énergie hydraulique des barrages, les éoliennes, les hydroliennes qui puisent leur énergie des courants marins, ainsi que divers dispositifs qui récupèrent l'énergie de la houle marine, ou encore l'énergie solaire.

Si les installations qui produisent de l'électricité à partir de combustibles ou à partir d'eau retenue dans des barrages peuvent fonctionner de manière continue à puissance nominale ou maximale durant de très longues périodes, les énergies renouvelables sont caractérisées par un fonctionnement intermittent, et leur intégration dans un réseau ne permet en général que de délester une partie des centrales conventionnelles, certaines d'entre elles étant alors soit mise en régime ralenti, soit encore simplement arrêtées, en attente d'une demande de puissance de la part du réseau.

On connaît les diverses techniques utilisant des turbines ou des moteurs thermiques alternatifs pour produire de l'énergie mécanique à partir de carburants, tel le gaz ou le pétrole, qui consistent à comprimer un comburant, en général de l'air, puis de le mélanger à un carburant, puis de l'enflammer dans une chambre de combustion, et enfin de récupérer lors de la détente l'énergie mécanique produite. Dans ce type de machine tournante, on recherche un rendement maximal, lequel est fonction du niveau de température d'entrée de la turbine de détente ou du moteur. Les limites de température de fonctionnement sont dues à la tenue en température des aubes de la turbine de détente ou des parties métalliques des divers éléments actifs du moteur dans le cas d'un moteur thermique à pistons, plus particulièrement au niveau des soupapes, de la culasse et de la tête de piston.

On connaît aussi les turbines à vapeur qui sont utilisées dans les centrales nucléaires pour convertir l'énergie de l'eau portée à très haute température sous forme de vapeur, en énergie mécanique, puis en énergie électrique au sein de génératrices accouplées en bout d'arbre des turbines à vapeur. Ces turbines à vapeur fonctionnent en circuit fermé avec pour fluide caloporteur, de l'eau en phase vapeur en amont de la turbine et de l'eau liquide en aval de ladite turbine.

On a longtemps recherché à stocker l'énergie, de manière à pouvoir en disposer de manière quasi instantanée lors de pointes de consommation. De nombreuses techniques ont été développées et on peut citer, entre autres, les accumulateurs électriques, en général accumulateurs au plomb, ou le pompage d'eau dans un barrage en altitude, en vue d'être returbinée lors des pointes de demande d'énergie.

Le stockage d'énergie au sein de batteries électrique au plomb est valable pour les petites ou moyennes capacités, mais lorsqu'il faut stocker l'équivalent d'une tranche de centrale nucléaire, c'est-à-dire environ 1200MW sur des périodes de 24 ou 36 heures, les installations requises deviennent alors gigantesques et irréalisables en pratique.

Si les barrages constituent un excellent moyen de stocker l'énergie, les sites sont en nombre limités et de plus le stockage de très grandes quantités d'énergie nécessite de mobiliser des quantités énormes d'eau qui doivent alors être prélevées sur les quotas disponibles, pour être ensuite relâchées à des périodes ou l'on n'a pas besoin de ces quantités d'eau, par exemple pour l'irrigation, l'eau étant alors en partie perdue. Plusieurs sites sont cependant constitués d'un réservoir haut et d'un réservoir bas, en général des lacs de grande capacité et, en période de stockage, on pompe le contenu du lac inférieur vers le lac supérieur, pour le turbiner en sens inverse dès lors que des pointes de consommation nécessitent des appoints de puissance sur le réseau électrique.

Un autre moyen consiste à stocker l'énergie sous forme d'air comprimé, pour la retransformer ensuite en énergie mécanique par le biais de moteurs à pistons, à palettes ou encore de turbines.

On connaît le brevet WO-2005-108758 qui décrit un mode de stockage d'énergie sous forme de chaleur dans une enceinte sous-terraine, la chaleur étant engendrée par la compression d'air initialement à pression atmosphérique et à température ambiante, la température au sein du stockage enterré étant d'environ 700°C. Dans cette application, le gaz, de l'air, circule en circuit ouvert, depuis l'atmosphère libre vers la caverne lors de la phase de stockage, et, depuis la caverne vers l'atmosphère libre lors de la phase de restitution de l'énergie.

Dans un autre domaine technique, on connaît les régénérateurs couramment employés dans les industries du feu, c'est-à-dire dans les hauts fourneaux, dans l'industrie de la céramique et de la terre cuite, dans l'industrie du verre et les cimenteries, qui consistent à envoyer les gaz brûlés chauds dans des grandes tours pour réchauffer des masses réfractaires qu'elles comprennent de manière à récupérer les calories des gaz, avant de relâcher lesdits gaz dans l'atmosphère. Lorsque la température maximale est atteinte au sein des matériaux réfractaires, on arrête la circulation de gaz chaud et l'on envoie à contre courant de l'air frais qui se réchauffe alors au contact des matériaux réfractaires pour être enfin dirigé vers l'entrée des fours, ou au niveau de brûleurs. Ces dispositions permettent de réduire considérablement les pertes de chaleur au sein de processus industriels gros consommateurs en énergie.

Le problème posé est de stocker l'énergie électrique de centrales conventionnelles, telles des centrales à charbon, à gaz, à pétrole, ou encore des centrales nucléaires, en vue de pouvoir la restituer très rapidement et en quantité considérable, dans le réseau électrique pendant les périodes de pointe lorsque la demande en énergie dépasse la capacité de production.

De même dans le cas des énergies renouvelables, telles les éoliennes, les hydroliennes, le problème est de pouvoir stocker des quantités d'énergie considérables en période de vent ou de courants importants, correspondant à des surplus de production, en vue de restituer cette énergie en phase de déficit de production, c'est à dire lorsque vent ou courant ne permettent pas de maintenir le niveau de production d'énergie à un seuil minimum.

Pour ce faire, la présente invention consiste essentiellement à stocker des quantités considérables d'énergie électrique sous forme de chaleur au sein de masses de produits réfractaires, le fluide permettant le transfert d'énergie étant un gaz, de préférence un gaz neutre, tel l'argon, puis de restituer cette énergie potentielle thermique stockée, sous forme d'énergie électrique.

Plus précisément, la présente invention fournit une installation de stockage et restitution d'énergie électrique caractérisée en ce qu'elle comprend :

A) une première enceinte calorifugée remplie d'un premier matériau réfractaire poreux apte à être traversée par un gaz circulant à travers ladite première enceinte entre 2 extrémités supérieure et inférieure de ladite première enceinte, et

B) une seconde enceinte calorifugée remplie d'un second matériau réfractaire poreux apte à être traversée par un gaz circulant à travers ladite seconde enceinte entre 2 extrémités supérieure et inférieure de ladite seconde enceinte, et

C) des canalisations calorifugées permettant la circulation de gaz en circuit fermé entre les 2 enceintes comprenant des première et seconde canalisations supérieures entre les extrémités supérieures des deux enceintes et des première et seconde canalisations inférieures entre les extrémités inférieures des deux enceintes, et

D) une unité de compression et détente de gaz comprenant

D1) au moins un premier groupe de compression/détente de gaz intercalé entre les extrémités supérieures desdites première et seconde enceinte auxquelles il est relié par des première et respectivement seconde canalisations supérieures, comprenant un premier piston apte à être déplacé en translation dans un premier cylindre, ledit premier groupe de compression/détente de gaz étant couplé à un moteur électrique et un générateur électrique, ledit premier groupe de compression / détente de gaz pouvant fonctionner

- soit en mode compression, le dit premier piston étant déplacé en translation par actionnement du dit moteur électrique alimenté par une énergie électrique à stocker pour compresser dans le dit premier cylindre le gaz provenant de ladite extrémité supérieure de la seconde enceinte et l'envoyer à ladite extrémité supérieure de la première enceinte,
- soit en mode détente ou « moteur thermodynamique » ledit premier piston étant déplacé en translation par expansion dans ledit premier cylindre du gaz provenant de ladite extrémité supérieure de la première enceinte pour l'envoyer à ladite extrémité supérieure de la seconde enceinte par ladite seconde canalisation supérieure, le déplacement dudit premier piston permettant ainsi d'actionner ledit générateur électrique et ainsi restituer de l'énergie électrique $E_R$ et

D2) au moins un second groupe de compression / détente de gaz intercalé entre les extrémités inférieures des dites première et seconde enceinte auxquelles il est relié par les dites première et respectivement seconde canalisations inférieures, comprenant un second piston apte à être déplacé en translation dans un second cylindre, le déplacement dudit second piston étant couplé à celui dudit premier piston de sorte que le dit second groupe de compression / détente de gaz est apte à fonctionner :

- soit en mode détente ou « moteur thermodynamique » quand ledit premier groupe de compression/détente fonctionne en mode compression, pour détendre le gaz provenant de ladite extrémité inférieure de la première enceinte et l'envoyer à ladite extrémité inférieure de la seconde enceinte,

- soit en mode compression quand le dit premier groupe de compression / détente fonctionne en mode détente, pour compresser le gaz provenant de la dite extrémité inférieure de la seconde enceinte et l'envoyer à ladite extrémité inférieure de la première enceinte, et

E) des premiers moyens de chauffage de gaz aptes à chauffer le gaz circulant dans une dite seconde canalisation supérieure entre l'extrémité supérieure de ladite seconde enceinte et ledit premier groupe de compression/détente, et, de préférence, des seconds moyens de chauffage de gaz aptes à chauffer du gaz à l'intérieure de la dite seconde enceinte, et

F) des moyens de refroidissement de gaz de préférence un échangeur thermique aptes à refroidir du gaz circulant dans desdites premières canalisations inférieures entre l'extrémité inférieure de la première enceinte et ledit second groupe de compression/détente.

On comprend que les déplacements des deux premier et second piston sont couplés de sorte que le déplacement dudit premier piston en mode détente ou « moteur thermodynamique » par expansion du gaz dans le premier cylindre n'est pas entièrement restituée au dit générateur électrique car il provoque le déplacement dudit second piston en mode compression pour la compression du gaz dans le second cylindre, et, inversement, le déplacement dudit second piston en mode détente par expansion du gaz dans le second cylindre participe au déplacement dudit premier piston en mode compression pour la compression du gaz dans le premier cylindre.

Plus particulièrement, les dits premier et second piston sont couplés mécaniquement à un même vilebrequin apte à être actionné en rotation par ledit moteur électrique et apte à actionner ledit générateur d'électricité, les déplacements desdits premier et second pistons étant de préférence calés à 180° en opposition de phase.

On comprend donc que le dit premier piston est en fin de course de rapprochement maximum de la culasse au fond dudit premier cylindre (« point mort haut ») quand ledit second piston est en position initiale de retrait maximum par rapport à la culasse de fond du dit second cylindre (« point mort bas ») et vice versa.

Plus particulièrement encore, les deux premier et second cylindres comportent chacun au moins deux soupapes permettant l'admission et respectivement l'échappement de gaz desdits premier et second cylindres, les ouverture et fermeture desdites soupapes étant commandées en fonction de la position des pistons dans lesdits cylindres ou des valeurs de la pression du gaz dans les dits cylindres.

Plus particulièrement, les ouvertures et fermetures des deux soupapes d'un cylindre sont commandées comme suit :

1- Pour un piston d'un dit groupe de compression/détente fonctionnant en mode compression :

1a- l'ouverture de la soupape d'admission et fermeture de la soupape d'échappement sont commandées lorsque le piston est à son point mort haut et commence à s'éloigner de la culasse du cylindre,
1b- la fermeture de la soupape d'admission est commandée lorsque le piston est à son point mort bas et se redirige vers la culasse du cylindre en comprimant le gaz, et
1c- l'ouverture de la soupape d'échappement est commandée dès que la pression dans le cylindre atteint la valeur de la pression de l'enceinte en aval.

2- pour un piston d'un dit groupe de compression/détente fonctionnant en mode détente encore appelé « mode moteur thermodynamique » :

2a- l'ouverture de la soupape d'admission et fermeture de la soupape d'échappement sont commandées lorsque le piston est à son point mort haut et commence à s'éloigner de la culasse du cylindre,
2b- la fermeture de la soupape d'admission est commandée avant que le piston n'atteigne son point mort bas de sorte que la valeur de la pression dans le cylindre soit sensiblement égale à celle de l'enceinte en aval lorsque le piston sera à son point mort bas et se redirigera vers la culasse du cylindre, et
2c- l'ouverture de la soupape d'échappement est commandée dès que le piston aura atteint son point mort bas.

Dans un mode préféré de réalisation, l'installation selon l'invention est remplie d'un gaz neutre notamment l'azote, de préférence de l'argon.

Comme explicité plus loin, ce gaz argon est avantageux car il s'agit d'un gaz permanent et neutre, donc non corrosif pour les canalisations, gaz mono-atomique présentant l'avantage de s'échauffer facilement, donc un taux de compression limité, et un coût réduit compte tenu de son abondance.

Dans des modes de réalisation particuliers, l'installation présente les caractéristiques selon lesquelles :

- lesdits première enceinte et premier matériau réfractaire poreux sont capables de résister à une température T1 d'au moins 300°C, de préférence d'au moins 300 à 1000°C, de préférence encore de 400 à 600°C et
- lesdits seconde enceinte et second matériau réfractaire poreux sont capables de résister à une température T2 d'au moins 100°C, de préférence d'au moins 100°C à 500°C, de préférence encore de 200 à 400°C.

Avantageusement, ledit premier cylindre est plus volumineux que ledit second cylindre.

Plus particulièrement, ledit premier cylindre est dimensionné pour compresser et respectivement détendre, et réchauffer et respectivement refroidir un gaz entre les dites températures T1 et T2, tandis que ledit second cylindre est dimensionné pour compresser et respectivement détendre et réchauffer et respectivement refroidir un gaz entre la température T3 de -50 à -20°C et la température ambiante T0.

De préférence, lesdits matériaux réfractaires présentent une capacité calorifique volumique intrinsèque d'au moins 2000 kJ x m$^{-3}$ x K$^{-1}$, de préférence encore au moins 2800 kJ x m$^{-3}$ x K$^{-1}$.

Avantageusement, lesdits premier et second matériaux réfractaires poreux présentent une porosité de 20 à 60 %.

Plus particulièrement, lesdits premier et second matériaux réfractaires poreux sont constitués de briques poreuses assemblées les unes contre les autres, de préférence traversées de perforations cylindriques disposées parallèlement dans une même direction longitudinale que la dite enceinte dans laquelle elles sont assemblées, les dites perforations étant de préférence encore de diamètre 2 à 20 mm.

Dans des modes de réalisation particuliers, lesdits premier et second matériaux réfractaires poreux sont constitués d'argile cuite, ou de produits céramique à teneurs élevées en composés choisis parmi les oxydes, magnésie, alumine et chaux.

On peut citer comme matériaux réfractaires les chamotte, magnésie, dolomie, mullite mais aussi carbone, les bétons réfractaires, voire un matériau naturel comme les graviers siliceux.

Plus particulièrement, ledit premier matériau réfractaire poreux est constitué d'argile de seconde cuisson ou chamotte, et ledit second matériau réfractaire poreux est constitué d'argile de première cuisson.

Dans un mode de réalisation particulier, lesdites première et seconde enceintes ont un volume chacune d'au moins 500 m3, de préférence de 1000 à 5000 m3.

Avantageusement, lesdites première et seconde enceintes sont constituées chacune d'une pluralité de colonnes verticales en acier dont les extrémités supérieures et inférieures sont reliées à une même dite canalisation supérieure et respectivement inférieure par l'intermédiaire d'un collecteur supérieur et respectivement collecteur inférieur.

La présente invention fournit également un procédé de stockage d'énergie électrique sous forme d'énergie thermique dans lequel on utilise une installation selon l'invention caractérisée en ce que, après une étape initiale de préchauffage du gaz de ladite deuxième enceinte que l'on chauffe à température $T_2$, ladite installation étant remplie d'un gaz permanent, initialement à température ambiante $T_0$ on réalise les étapes successives dans lesquelles :

1) le gaz sortant de l'extrémité supérieure de la seconde enceinte à une température $T_2$ est chauffé à une température $T_1$ supérieure à une température $T_2$ par compression dans un dit premier groupe de compression/détente fonctionnant en mode compression avant d'être envoyé à l'extrémité supérieure de ladite première enceinte, dans laquelle il s'établit une pression P1 supérieure à la pression P2 de la deuxième enceinte, ledit premier groupe de compression étant entraîné par ledit moteur électrique alimenté par l'énergie électrique à stocker $E_1$, et

2) le gaz traverse de part en part ladite première enceinte entre ladite extrémité supérieure et sa dite extrémité inférieure et il ressort de ladite extrémité inférieure de la première enceinte à une température ambiante T0 ou une température T'1 supérieure à T0 mais inférieure à T2, et

3) le gaz est ensuite refroidi le cas échéant à une température ambiante T0 grâce à desdits moyens de refroidissement de gaz de préférence du type échangeur de chaleur, en aval de la sortie de l'extrémité inférieure de la première enceinte, et

4) le gaz est ensuite détendu à travers un dit second groupe de compression/ détente fonctionnant en mode détente, à ladite pression P2 de la seconde enceinte inférieure à la pression P1, le gaz se trouve ainsi refroidi à une température T3 inférieure à T0 avant d'entrer dans ladite seconde enceinte par son extrémité inférieure, et

5) on fait circuler le gaz à travers ladite seconde enceinte entre lesdites extrémités inférieure et supérieure de la deuxième enceinte, ce qui a pour effet d'augmenter le volume de matériau réfractaire de la partie inférieure de ladite seconde enceinte refroidie à la température T3, et de diminuer celui de sa partie supérieure à la température T2 ou T'2 inférieure à T2 mais supérieure à T0 et T'1, et si nécessaire, le cas échéant on réchauffe à la température T2 le gaz sortant de la seconde enceinte la température T'2 .à l'aide de seconds moyens de chauffage de gaz et

6) on réitère les étapes 1) à 5) ci-dessus jusqu'à ce que la partie supérieure de la première enceinte réchauffée à la température T1 occupe au moins 80% du volume de ladite première enceinte, et que la partie inférieure de la seconde enceinte refroidie à la température T3 occupe au moins 80% du volume de la seconde enceinte.

On comprend que à chaque étape 2), lorsque le gaz arrive à la température T1 à l'extrémité supérieure de la première enceinte laquelle se trouve initialement entièrement à la température T0, et que le gaz descend depuis l'extrémité supérieure vers l'extrémité inférieure de la première enceinte, le passage du gaz dans ledit premier matériau réfractaire poreux a pour effet que le gaz cède ses calories audit premier matériau réfractaire dans la partie supérieure de la première enceinte laquelle se trouve alors réchauffée à la température T1 tandis que sa partie inférieure non réchauffée ou moins réchauffée est à une température T'1 entre T0 et T1, en pratique entre T0 et T2. Au fur et à mesure des passages successifs du gaz qui circule en boucle fermée, le front ou plutôt la couche de transition thermique entre les partie supérieure chaude et partie inférieure froide de la première enceinte progresse vers le bas et la partie supérieure à la température T1 occupe un volume de plus en plus important. Parallèlement, à l'étape 5), le gaz arrive à une température froide T3 en bas la deuxième enceinte ce qui a pour effet de céder des frigories audit second matériau réfractaire poreux et donc refroidir la partie inférieure de la seconde enceinte laquelle passe de la température T2 à la température T3. Et, au fur et à mesure des différents passages le front ou plutôt la couche de transition thermique entre les partie supérieure chaude et partie inférieure froide de la seconde enceinte progresse vers le haut et la partie inférieure à la température T3 occupe un volume de plus en plus important.

L'énergie électrique E1 mise en oeuvre pour alimenter en énergie le premier groupe de compression/détente fonctionnant en mode compression est donc stockée sous forme d'énergie thermique en calories dans la première enceinte et frigories dans la deuxième enceinte, cette énergie est facteur du gradient T1-T3.

De préférence, on interrompt le stockage de manière à ce que la partie inférieure de la première enceinte à ladite température T'1 représente au moins 10% du volume de la première enceinte, de préférence 10 à 20% du volume de la première enceinte, et/ou la partie supérieure de la seconde enceinte à la température T2 représente moins de 20%, de préférence de 10 à 20% du volume de ladite seconde enceinte.

Selon d'autres caractéristiques particulières avantageuses de la présente invention, on met en oeuvre desdits matériaux réfractaires dont les propriétés et les masses sont telles que :

- lesdites températures T1 et T2 sont telles que T1/T2=1.2 à2 et T1/T0 est supérieur à 1.3, de préférence supérieur à 1.5 et de préférence encore inférieur à 2.5 et P1/P2 est de 2 à 4, et
- T1 est de 300°C à 1000°C, de préférence de 400 à 600°C, etT2 est de 100 à 500°C, de préférence de 200 à 400°C, et
- les pressions P1 est de 20 à 300 bar absolu (2MPa à 30MPa), plus particulièrement de 30 à 150 bar absolu (3 à 15 MPa) et P2 est de 10 à 100 bar absolu (1MPa à 10MPa), plus particulièrement de 20 à 50 bar absolu (2 à 5 MPa) et
- T0 est de 10° à 40°C et T3 est de -50°C à -20°C, T1' étant le cas échéant de 20° à 100°C.Avantageusement, l'on stocke une quantité d'énergie électrique de 20MWh à 1.000MWh.La présente invention fournit également un procédé de restitution d'une énergie électrique à partir d'une énergie thermique stockée par un procédé selon l'invention telle que défini ci-dessus, caractérisé en ce que, après une phase initiale de démarrage dans laquelle on actionne les dits premier et dit second groupe de compression avec le dit moteur électrique 51, au cours de laquelle phase initiale on fait fonctionner les dits premier et second groupe en mode détente et respectivement compression de manière à établir un gradient de pression entre la pression P'1 de la première enceinte et une pression P'2 inférieure à P'1 de la deuxième enceinte, de préférence P'1 étant supérieur à P1 et P'2 étant inférieur à P2, on réalise les étapes successives dans lesquelles :

1) le gaz sortant par l'extrémité supérieure $1_1$ de la première enceinte à la dite température T1 est détendu et refroidi à la température T2 à travers le dit premier groupe de compression/détente fonctionnant en mode détente et actionnant ledit générateur d'électricité 52 permettant de délivrer une énergie électrique restituée $E_R$, et

2) le gaz traverse ladite deuxième enceinte depuis son extrémité supérieure jusqu'à son extrémité inférieure ,une partie supérieure de la deuxième enceinte étant réchauffée à ladite température T2, une partie inférieure de la deuxième enceinte restant à ladite température T3 et, et

3) le gaz sortant de l'extrémité inférieure de ladite deuxième enceinte à son extrémité inférieure à la température T3 est ensuite comprimé en passant par ledit second groupe de compression/détente fonctionnant en mode compression actionné par l'énergie libérée par ledit premier groupe de compression/détente fonctionnant en mode détente, de manière à le réchauffer à une température T4 supérieure à une température ambiante T0 et le cas échéant supérieur à T'1, mais inférieure à T2 en sortie dudit second groupe de compression/détente 40, et

4) de préférence, le gaz est ensuite refroidi à la température ambiante T0 ou T'1 grâce à des dits moyens de refroidissement avant d'être introduit dans ladite première enceinte par son extrémité inférieure pour rejoindre la partie inférieure de ladite première enceinte qui se trouve à ladite température T'1, et

5) on fait circuler le gaz à travers ladite première enceinte, ce qui a pour effet d'augmenter le volume de matériau réfractaire de la partie inférieure 1b qui est à ladite température T'1 et de diminuer le volume de matériau réfractaire de la partie supérieure 1a à ladite température chaude T1, et

6) on réitère les étapes 1) à 5) ci-dessus jusqu'à ce que la partie inférieure de la première enceinte à ladite température T1 représente au moins 80% du volume de la première enceinte et la partie supérieure de ladite deuxième enceinte à ladite température T2 représente au moins 80% en volume de ladite deuxième enceinte.

On comprend que, pour maintenir dans les enceintes les mêmes températures T1 et T2 que dans le procédé de stockage d'énergie selon l'invention, on doit établir à l'étape initiale un gradient de pression entre les deux enceintes supérieur par rapport au gradient de pression entre les enceintes lors du procédé de stockage selon l'invention.

On comprend que à chaque étape 2) lorsque le gaz arrive à la température T2 à l'extrémité supérieure de la seconde enceinte laquelle se trouve initialement à pas plus de 20 % à la température T2 voire T'2 inférieure à T2 , et que le gaz descend depuis l'extrémité supérieure vers l'extrémité inférieure de la seconde enceinte, le passage du gaz dans ledit second matériau réfractaire poreux a pour effet que le gaz cède ses calories audit second matériau réfractaire dans la partie supérieure de la seconde enceinte laquelle se trouve alors réchauffée à la température T2 tandis que sa partie inférieure non réchauffée reste à la température T3. Au fur et à mesure des différents passages du gaz, le front ou plutôt la couche de transition thermique entre les partie supérieure chaude et partie inférieure froide de la deuxième enceinte progresse vers le bas et la partie inférieure à la température T3 occupe un volume de moins en moins important. Parallèlement, à l'étape 5), le gaz arrive à une température ambiante T0 ou T'1 en bas la première enceinte ce qui a pour effet de céder des frigories au dit premier matériau réfractaire poreux et donc refroidir la partie inférieure de la première enceinte laquelle passe de la température T1 à la température T'1. Et, au fur et à mesure des différents passages du gaz, le front ou plutôt la couche de transition thermique entre les partie supérieure chaude et partie inférieure froide de la première enceinte progresse vers le haut et la partie supérieure à la température T1 occupe un volume de moins en moins important.

L'énergie électrique $E_1$ stockée sous forme d'énergie thermique en calories dans la première enceinte et frigories dans la deuxième enceinte est ainsi convertie en énergie électrique $E_R$ à partir de l'énergie mécanique libérée par ledit premier groupe de compression/détente lors de la détente et refroidissement du gaz de la première enceinte

De préférence, à l'étape 6), on interrompt le procédé de restitution d'énergie de façon à ce qu'on maintienne une partie supérieure de la première enceinte à une dite température T1, ladite partie supérieure représentant moins de 20%, de préférence de 10 à 20%, en volume de ladite première enceinte, et/ou une partie inférieure de la deuxième enceinte à ladite température froide T3 représente moins de 20%, de préférence de 10 à 20%, de volume de la deuxième enceinte.

Avantageusement, le rendement de restitution d'énergie électrique par ledit générateur d'électricité $E_R/E_1$ est supérieur à 60%, de préférence de 70 à 80%.

Selon d'autres caractéristiques avantageuses du procédé de restitution d'énergie électrique selon l'invention :

- P'1/P'2 est de 2.2 à 5, et
- T4 est de 30 à 100°C, et
- la pression P'1 est de 60 à 400 bar absolu (6MPa à 40MPa) et P'2 est de 15 à 90 bar absolu (1.5MPa à 9MPa).

D'autres avantages et autres caractéristiques de la présente invention apparaîtront à la lumière de la description détaillée qui va suivre, en référence aux figures suivantes dans lesquelles :

La figure 1A représente le diagramme fonctionnel d'une installation selon l'invention dans un procédé de stockage d'énergie selon l'invention, c'est-à-dire en phase de rechargement de la première enceinte ou source chaude,

La figure 1B représente le diagramme fonctionnel de l'installation selon l'invention dans une restitution sous forme d'énergie électrique de l'énergie thermique stockée au sein de la première enceinte ou source chaude,

Les figures 2A à 2D représentent différentes phases d'un cycle de fonctionnement des premier et deuxième groupes de compression/détente 30 et 40 fonctionnant respectivement en mode de compression et mode de moteur thermo dynamique dans le cadre d'un procédé de stockage d'énergie.

La figure 3 représente en coupe et en vue de côté une enceinte d'une installation selon l'invention avec un arrachement montrant des perforations cylindriques,

Les figures 3A et 3B représentent en coupe selon un plan horizontal, deux variantes d'arrangement des éléments de matériaux réfractaires respectivement de forme carrée et hexagonale.

La figure 4 représente un cycle thermodynamique de type gaz parfait, ainsi qu'une compression et une détente d'un gaz réel.

La figure 5 représente le cycle thermodynamique de rechargement de la première enceinte à partir d'une énergie électrique en provenance du réseau.

La figure 6 représente le cycle thermodynamique de restitution de l'énergie en provenance de la première enceinte en vue de sa réinjection dans le réseau.

Les figures 7, 7A et 7B représentent la progression d'une couche de transition thermique de hauteur h au sein d'une dite première enceinte (figure 7) entre les extrémités supérieure (figure 7A) et inférieure (figure 7 B).

Les figures 8A et 8B représentent en coupe et en vue de côté un ensemble de réservoirs en forme de colonnes verticales sous pression constituant une enceinte selon l'invention, le système d'isolation étant soit extérieur auxdits réservoirs (8A), soit interne auxdits réservoirs (8B).

Le dispositif de stockage d'énergie électrique et restitution d'énergie électrique selon l'invention comporte :

- une première enceinte calorifugée 1, comprenant une paroi en acier de 10 à 100 mm d'épaisseur et remplie d'un premier matériau réfractaire poreux capable de résister à des températures et pressions élevées d'un gaz neutre qu'elle contient, T1 de 300 à 1000 °C, plus particulièrement 400°C et P1 de 50 à 300 bara (bar absolu ou 5MPa à 30MPa).

- une deuxième enceinte calorifugée 2, de même volume de 1000 à 5000m3 par exemple, comprenant une paroi en acier de 10 à 100 mm et remplie d'un deuxième matériau réfractaire poreux capable de résister aux température T2 et pression P2 du gaz inerte qu'elle contient, à savoir T2 de 100 à 500°C, plus particulièrement environ 250°C.

Lesdites première enceinte 1 et deuxième enceinte 2 sont substantiellement entièrement remplies d'un matériau réfractaire poreux 11 à fort volume calorifique, qui sera décrit plus loin.

Le dispositif comporte des conduites de circulation en circuit fermé entre lesdites première enceinte 1 et deuxième enceinte 2 qui permettent au gaz contenu dans l'installation de traverser chaque enceinte entre deux extrémités opposées $1_1$-$1_2$ et $2_1$-$2_2$, situées de préférence respectivement au niveau des extrémités haute et basses desdites enceintes.

Les conduites de circulation entre lesdites première et deuxième enceintes comportent en outre des moyens de compression/détente du gaz (30 et 40) entre les deux enceintes, explicités ci-après.

Plus particulièrement, lesdites première et deuxième enceintes sont disposées verticalement.

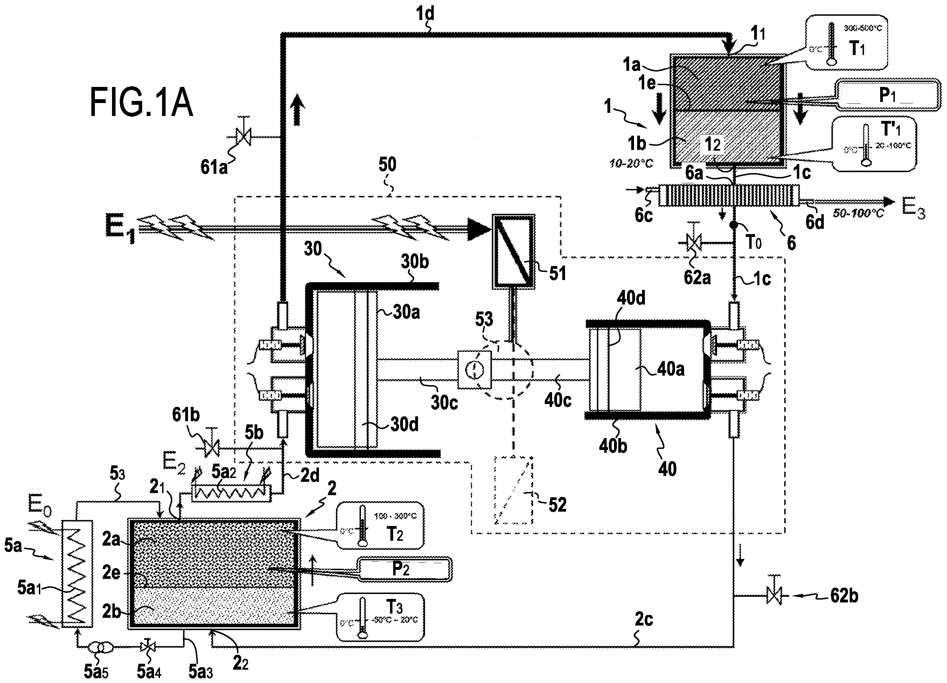

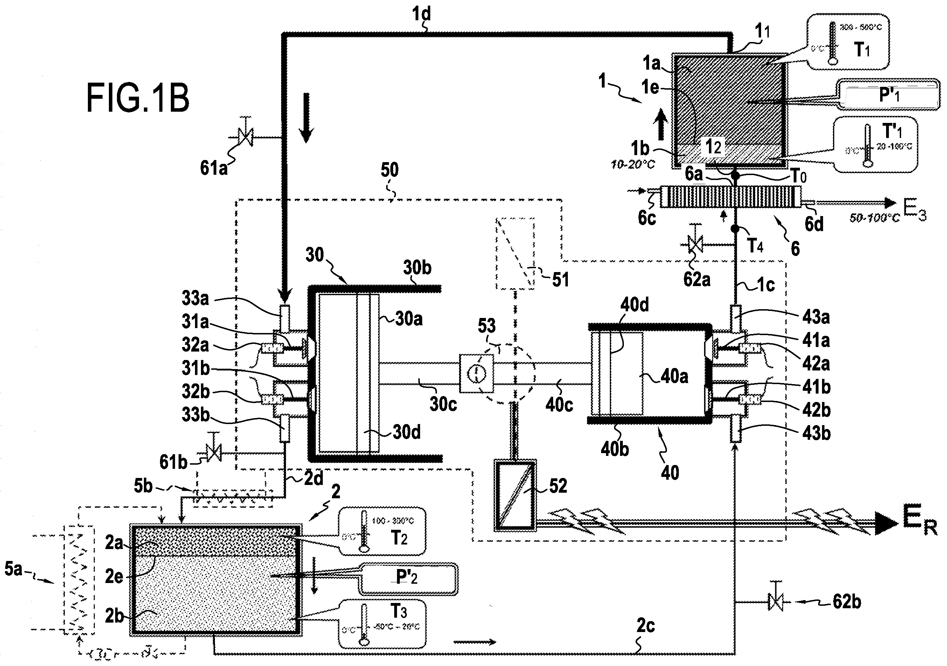

Sur les figures 1A et B, la première enceinte 1 comprend à son extrémité supérieure $1_1$ une conduite supérieure 1d, débouchant dans la partie supérieure 1a de la première enceinte, et à son extrémité inférieure $1_2$ une première conduite inférieure 1c débouchant dans la partie inférieure 1b de la première enceinte 1.

De même, la deuxième enceinte 2 comporte à son extrémité supérieure $2_1$ une deuxième conduite supérieure 2d, débouchant dans la partie supérieure 2a de la deuxième enceinte 2, et à son extrémité inférieure $2_2$ une deuxième conduite inférieure 2c débouchant dans la partie inférieure 2b de la deuxième enceinte 2.

Lesdites première et deuxième conduites inférieures 1c, 2b, et supérieures 1d, 2d, sont également calorifugées.

Ladite deuxième enceinte 2 est couplée avec un premier réchauffeur 5a, de préférence un réchauffeur comprenant une résistance électrique $5a_1$ et un circuit fermé de canalisation de réchauffement $5a_3$ entre deux extrémités de la deuxième enceinte, le gaz circulant dans la canalisation de réchauffement $5a_3$ est réchauffé par ledit premier réchauffeur 5a.

Une unité de compression et détente 50 est intercalée entre lesdites première enceinte 1 et deuxième enceinte 2. Cette unité de compression et détente 50 comprend un moteur électrique 51 alimenté par une énergie électrique $E_1$, permettant d'actionner un premier groupe de compression/détente 30 à piston, fonctionnant en mode compression comme il sera explicité ci-après. L'unité 50 comprend également un deuxième groupe de compression/détente à piston 40 couplé au premier groupe de compression/détente 30 et fonctionnant de manière complémentaire comme il sera explicité ci-après.

Ledit premier groupe 30 est relié en sortie à l'extrémité supérieure $1_1$ de ladite première enceinte 1 par ladite première canalisation supérieure 1d, et ledit premier groupe 30 est relié à son entrée à l'extrémité supérieure $2_1$ de ladite deuxième enceinte 2 par ladite deuxième canalisation supérieure 2d. Ladite deuxième canalisation supérieure 2d constitue la canalisation d'alimentation du premier groupe 30 et ladite première canalisation supérieure 1d constituant la canalisation d'évacuation du gaz du premier groupe 30 après compression en cycle de stockage et ledit premier groupe fonctionnant en mode compression, comme il sera explicité ci-après.

Un second réchauffeur 5b, de préférence comportant une seconde résistance électrique $5a_2$, coopère avec ladite deuxième canalisation supérieure 2d, ledit second réchauffeur 5b étant intercalé entre l'extrémité supérieure $2_1$ de la deuxième enceinte 2 et l'entrée du premier groupe 30.

Dans les figures 1A, 1B, on a décrit deux réchauffeurs 5a-5b séparés, mais on peut mettre en avant un même et unique réchauffeur dès lors que l'on adapte le cheminement des conduites.

Un second groupe de compression/détente 40 est relié à l'extrémité inférieure $1_2$ de ladite première enceinte 1 par ladite première canalisation inférieure 1c, et ledit second groupe de compression/détente 40 est relié à l'extrémité inférieure $2_2$ de ladite deuxième enceinte 2 par ladite deuxième canalisation inférieure 2c. Ladite première canalisation inférieure 1c sert à l'alimentation du second groupe de compression/détente 40 en gaz évacué depuis la partie basse 1b de la première enceinte 1, et le gaz s'évacuant dudit second groupe de compression/détente 40 rejoint la partie basse 2b de ladite deuxième enceinte 2 par l'intermédiaire de ladite deuxième canalisation inférieure 2c, lorsque le dispositif fonctionne en cycle de stockage et ledit second groupe fonctionne en mode détente ou « moteur thermo dynamique » comme il sera explicité ci-après.

Un échangeur de chaleur 6 coopère avec ladite première canalisation inférieure 1c, entre l'extrémité inférieure $1_2$ de ladite première enceinte 1 et ledit second groupe de compression/détente 40.

L'unité 50 comporte également un alternateur électrique 52, attelé audit premier groupe de compression/détente 30, de façon à restituer une énergie électrique $E_R$ lorsque ledit premier groupe de compression/détente fonctionne en mode détente ou « moteur thermo dynamique », comme il sera explicité ci-après, dans un cycle de déstockage d'énergie.

Le premier groupe de compression/détente 30 est alimenté en gaz par ladite première conduite supérieure 1d, assurant la liaison avec l'extrémité supérieure $1_1$ de la première enceinte 1. Et, le gaz détendu sortant dudit premier groupe de compression/détente 30, lorsque le dispositif fonctionne en cycle de déstockage, est évacué vers l'extrémité supérieure $2_1$ de la deuxième enceinte 2 par l'intermédiaire de la deuxième conduite supérieure 2d assurant ainsi la liaison avec l'extrémité supérieure $2_1$ de la deuxième enceinte.

Ledit deuxième groupe 40 est alimenté en gaz par ladite deuxième conduite inférieure 2c assurant ainsi sa liaison avec l'extrémité inférieure $2_2$ de la deuxième enceinte. Et, le gaz est évacué dudit deuxième groupe 40 en direction de l'extrémité inférieure $1_2$ de ladite première enceinte 1, par l'intermédiaire de ladite première conduite inférieure 1c.

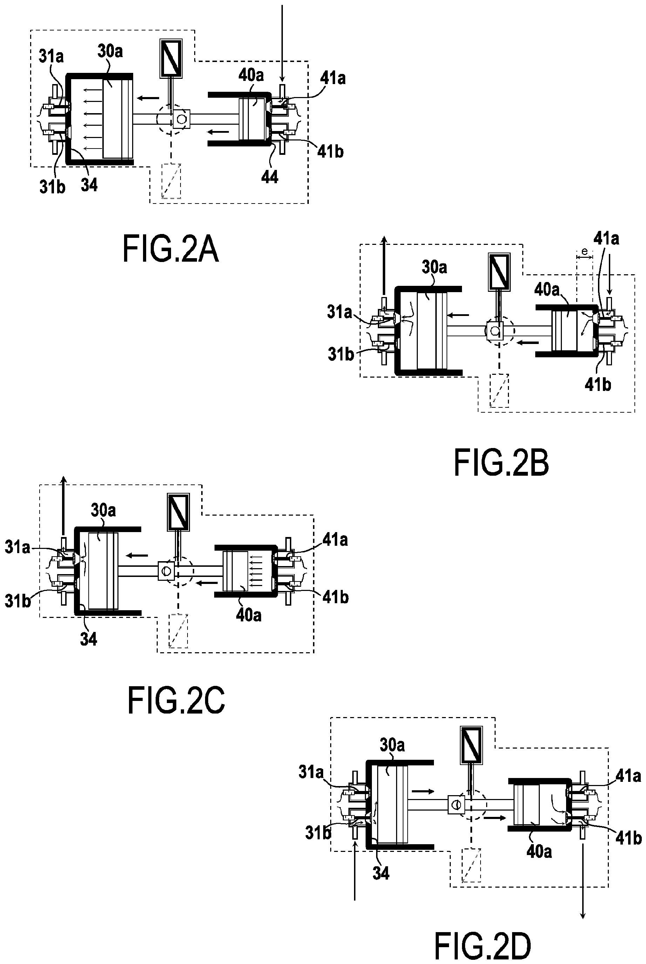

Sur les figures 2A à 2D, on a illustré le détail des fonctionnements des premier groupe 30 et deuxième groupe 40 lors d'un cycle de stockage d'énergie.

Le moteur électrique 51 est connecté à un vilebrequin 53 lui-même connecté à une génératrice 52, ledit vilebrequin actionnant un premier groupe 30, jouant le rôle de compresseur en phase de stockage d'énergie, et de moteur thermodynamique en phase de restitution d'énergie. Ledit vilebrequin est aussi relié audit second groupe 40 jouant le rôle de moteur thermodynamique en phase de stockage d'énergie, et de compresseur en phase de restitution d'énergie.

Le premier groupe 30 est constitué d'un premier cylindre 30b dans lequel se déplace axialement un premier piston 30a muni de préférence de segments 30d, et relié, de manière connue, par une première bielle 30c au maneton, non représenté, dudit vilebrequin 53. La première culasse 34 en tête de cylindre est équipée de deux premières soupapes 31a-31b actionnées, de manière connue, mécaniquement, électriquement ou de manière hydraulique par des premiers actionneurs 32a-32b, de manière à mettre en communication l'intérieur du volume du cylindre avec les orifices respectifs 33a-33b selon les séquences respectives du cycle de compression lors du stockage de l'énergie, ou du cycle thermodynamique de détente lors de la restitution d'énergie.

De la même manière, le second groupe 40 est constitué d'un second cylindre 40b dans lequel se déplace axialement un second piston 40a muni de préférence de segments 40d, et relié, de manière connue, par une seconde bielle 40c au maneton, non représenté, dudit vilebrequin 53. La seconde culasse 44 en tête de cylindre est équipée de deux deuxièmes soupapes 41a-41b actionnées, de manière connue, mécaniquement, électriquement ou de manière hydraulique par des seconds actionneurs 42a-42b, de manière à mettre en communication l'intérieur du volume du cylindre avec les orifices respectifs 43a-43b selon les séquences respectives du cycle thermodynamique de détente lors du stockage de l'énergie, ou du cycle de compression lors de la restitution d'énergie.

Les premier et second pistons se déplacent en translation, de manière connue de l'homme de l'art, respectivement dans des premiers et second cylindres munis respectivement de premières et secondes culasses, ces dernières étant équipées de dites soupapes d'admission/échappement pilotées de manière connue de l'homme de l'art, mécaniquement, électriquement ou hydrauliquement selon des séquences qui seront détaillées plus avant dans la description. Les deux pistons 30a et 40a sont montés en opposition de phase, c'est-à-dire à 180° sur le vilebrequin 53. Ainsi, lorsque le vilebrequin 53 est animé d'un mouvement de rotation, les premier et second pistons sont animés de mouvements de translation selon l'axe de leur cylindre respectif de telle manière que lorsque l'un des pistons se rapproche de sa propre culasse, le piston opposé s'éloigne de sa propre culasse.

Ledit vilebrequin est relié d'une part à un moteur électrique 51 et d'autre part à une génératrice 52, de telle manière qu'en phase de stockage d'énergie, le moteur électrique 51 est actionné grâce à de l'énergie électrique $E_1$ en provenance du réseau, la génératrice 52 étant alors déconnectée dudit réseau, et en phase active de restitution de l'énergie, le moteur électrique 51 est déconnecté du réseau, et la génératrice 52 produit de l'énergie électrique $E_R$ qu'elle réinjecte dans ledit réseau.

Chacune desdites culasses comporte au moins deux soupapes, une soupape d'admission et une soupape d'échappement, actionnées de manière individuelle, mécaniquement, électriquement ou de manière hydraulique, selon une séquence particulière dépendant du type de cycle : cycle de charge ou cycle de restitution d'énergie.

Dans le cycle de charge, le premier groupe 30 joue le rôle de compresseur, le second groupe 40 jouant le rôle de moteur thermodynamique, restitue de l'énergie audit premier groupe 30 jouant le rôle de compresseur. Par contre, dans le cycle de restitution de l'énergie, les rôles sont inversés et le second groupe 40 joue le rôle de compresseur, le premier groupe 30 jouant le rôle de moteur thermodynamique, restitue de l'énergie audit second groupe 40 jouant le rôle de compresseur.

Le compresseur selon l'invention présente un jeu d'au moins deux soupapes jouant respectivement le jeu de soupape d'admission et de soupape d'échappement.

Ainsi, lors du fonctionnement d'un premier ou deuxième groupe en mode « compresseur », les soupapes sont commandées individuellement de manière à laisser pénétrer le gaz à « basse pression - basse température », dans le cylindre lorsque le piston s'éloigne de la culasse, en actionnant la première soupape, la seconde soupape étant hermétiquement close, et à laisser sortir le gaz à « haute pression-haute température », lorsque le piston se rapproche de la culasse, en actionnant la seconde soupape, la première soupape étant hermétiquement close. Le cycle de compression s'effectue sur un tour de vilebrequin. Lors du cycle de compression, pour éviter les retours de gaz de la conduite aval vers la chambre de compression, l'ouverture de la soupape d'échappement sera avantageusement synchronisée avec la montée en pression dans ladite chambre, c'est-à-dire que son ouverture ne sera déclenchée que lorsque la pression à l'intérieur de ladite chambre sera au moins égale à la pression en aval. De même, la fermeture de la soupape d'échappement sera actionnée rapidement dès que le piston sera au plus proche de la culasse et commencera son mouvement inverse, la soupape d'admission sera alors actionnée pour laisser passer le gaz en provenance de la conduite amont.

Les groupes 30 et 40 en mode détente ou moteur thermodynamique fonctionnent de manière similaire sur un cycle correspondant à un tour de vilebrequin, mais l'actionnement des soupapes est inversé par rapport à celui du compresseur.

Ainsi, lors du fonctionnement des groupes 30 et 40 en mode détente ou mode « moteur thermodynamique », les soupapes sont commandées individuellement de manière à laisser pénétrer le gaz à « haute pression - haute température », dans le cylindre lorsque le piston s'éloigne de la culasse, en actionnant la première soupape, la seconde soupape étant hermétiquement close, et à laisser sortir le gaz à « basse pression - basse température », lorsque le piston se rapproche de la culasse, en actionnant la seconde soupape, la première soupape étant hermétiquement close. Le cycle « moteur thermodynamique » s'effectue sur un tour de vilebrequin.

Le premier groupe fonctionne à haute température entre T1 et T2, tant en mode compresseur lors du stockage, qu'en mode moteur thermodynamique lors du déstockage, il présente une cylindrée importante.

Le second groupe fonctionne à basse température entre T3 et T0 ou T'1, tant en mode moteur thermodynamique lors du stockage, qu'en mode compresseur lors du déstockage, il présente une cylindrée plus faible que le premier groupe.

Sur les figures 2A à 2D, on a représenté en coupe et en vue de côté un cycle complet du dispositif correspondant à un tour complet du vilebrequin, en phase de stockage, c'est-à-dire que le piston de gauche agit en tant que compresseur, tandis que le piston de droite agit en tant que moteur thermodynamique.

Sur la figure 2A :

- le premier piston 30a (de gauche) a atteint son point mort bas et commence à se rediriger vers la culasse 34 en comprimant le gaz : les deux soupapes 31a-31b sont fermées, la pression augmente dans le cylindre, et simultanément,
- le second piston 40a (de droite) a atteint son point mort haut et commence à s'éloigner alors de la culasse 44 ; la soupape 41b est fermée et la soupape 41a s'ouvre de manière à laisser entrer le gaz chaud en provenance du bas de la première enceinte 1.

Sur la figure 2B :

- la soupape 31b étant en position fermée, le premier piston 30a (de gauche) se dirige vers la culasse 34 et comprime le gaz jusqu'à la valeur $P_1$, correspondant à la pression en aval, c'est-à-dire sensiblement à la valeur de la pression dans la première enceinte. La soupape 31a est alors ouverte de manière à diriger les gaz vers la conduite aval, et simultanément

- la soupape 41b étant en position fermée, le second piston 40a (de droite) s'éloigne de la culasse 44, et le gaz en provenance de la première enceinte continue à pénétrer dans le deuxième cylindre par la soupape 41a en position ouverte jusqu'à ce que le second piston de droite ait effectué une course d'une longueur e dans le second cylindre.

Sur la figure 2C:

- lorsque le second piston (de droite) a effectué la course «e», la soupape 41a est alors fermée. La soupape 41b restant fermée, le gaz chaud effectue son expansion et fournit de l'énergie au système, ladite énergie étant directement transférée au premier piston (de gauche), toujours en phase de compression.
- La distance e est calculée et ajustée en temps réel, de telle manière que, lorsque le second piston de droite se trouve au point mort bas, la pression à l'intérieur dudit second cylindre soit sensiblement égale à la pression régnant dans la seconde enceinte ($P_2$).

Sur la figure 2D :

- le second piston (de droite) atteint son point mort bas, le second piston se redirige ensuite vers la culasse, la soupape 41b est alors ouverte de manière à diriger le gaz vers le bas de la seconde enceinte 2.
- De même, le premier piston (de gauche) atteint son point mort haut et la soupape 31a est fermée, puis immédiatement la soupape 31b est ouverte de manière à laisser entrer le gaz en provenance du haut de la seconde enceinte 2.

Le cycle recommence alors comme expliqué en référence à la figure 2A. Il convient de noter que la valeur de « e » déclenchant la fermeture de la soupape 41a, n'est pas liée à la valeur de la pression $P_1$ déclenchant l'ouverture de la soupape 31a.

Lors du cycle de stockage précédemment décrit, l'énergie est essentiellement fournie par le moteur électrique 51. L'énergie fournie par le moteur thermodynamique (piston de droite), représente une très faible quantité d'énergie, par exemple 1-5% de l'énergie fournie par le moteur électrique, mais il est indispensable de réinjecter cette énergie dans le système de manière à éviter que le rendement global d'un cycle stockage-déstockage ne s'effondre.

Le cycle du déstockage est identique au cycle de stockage, donc symétrique en ce qui concerne les séquences d'ouverture-fermeture des soupapes, le piston de gauche devenant le moteur thermodynamique, et le piston de droite devenant le compresseur. Le moteur thermodynamique fournit alors une très grande quantité d'énergie, alors que le compresseur de droite n'utilise qu'une faible proportion de cette énergie, par exemple 1-5%, le reliquat d'énergie actionnant alors la génératrice 52, laquelle réinjecte dans le réseau l'énergie $E_R$.

Lors du démarrage du cycle de déstockage, il convient de lancer le vilebrequin, donc les mouvements des pistons. A cet effet, la génératrice n'étant pas en charge, le moteur électrique 51 est actionné pendant une courte période, par exemple 10 minutes, le temps que le dispositif atteigne son régime de fonctionnement. Il est ensuite déconnecté et la génératrice 52 est connectée au réseau pour réinjecter l'énergie produite dans ledit réseau.

Dans une version préférée de l'invention, moteur électrique et génératrice sont une seule et unique machine tournante, ce qui simplifie d'autant la réalisation mécanique du dispositif selon l'invention.

Pour la clarté des explications, chacun des premier et second groupes 30 et 40 a été représenté sur les figures 1A et 1B avec un seul ensemble piston-cylindre, mais on multiplie avantageusement le nombre d'ensembles piston-cylindre pour augmenter la capacité de l'unité 50. Le premier groupe 30 peut avoir un nombre de cylindres différents de celui du second groupe 40, mais ils restent associés au même vilebrequin, donc au même moteur électrique 51 et à la même génératrice 52.

Pour les fortes puissances, on dispose avantageusement plusieurs ensembles 50 fonctionnant en parallèle. Dans ce cas, chacun des ensembles 50 fonctionne simultanément avec les autres dans le même mode, soit le mode stockage, soit le mode déstockage. Il n'est cependant pas indispensable qu'ils fonctionnent tous simultanément : certains groupes peuvent être à l'arrêt, par exemple pour maintenance. Les conduites d'amenées et de départ de gaz propres audit groupe à l'arrêt, sont alors isolées du système grâce à des vannes d'isolation 61a-61b et 62a-62b représentées sur les figures 1A et 1B.

Les enceintes 1 et 2 sont remplies d'un matériau réfractaire poreux 11, permettant au gaz de circuler à travers lesdites enceintes de part en part entre leurs extrémités supérieure $1_1$-$2_1$ et inférieure $1_2$-$2_2$. Les matériaux réfractaires poreux mis en oeuvre dans les première et deuxième enceintes présentent une porosité (pourcentage de vide) de 20 à 60%, ce qui constitue un bon compromis entre un échange thermique suffisant entre le gaz et les matériaux réfractaires d'une part, et d'autre part, une perte de charge suffisamment faible, tout en conservant une vitesse de circulation suffisamment élevée à travers ledit matériau poreux. En effet, en opération, le dispositif selon l'invention est entièrement rempli de gaz neutre, de préférence d'argon, à savoir les circuits de canalisation mentionnés ci-dessus, les turbines et compresseurs, les réchauffeurs, ainsi que lesdites première et deuxième enceintes.

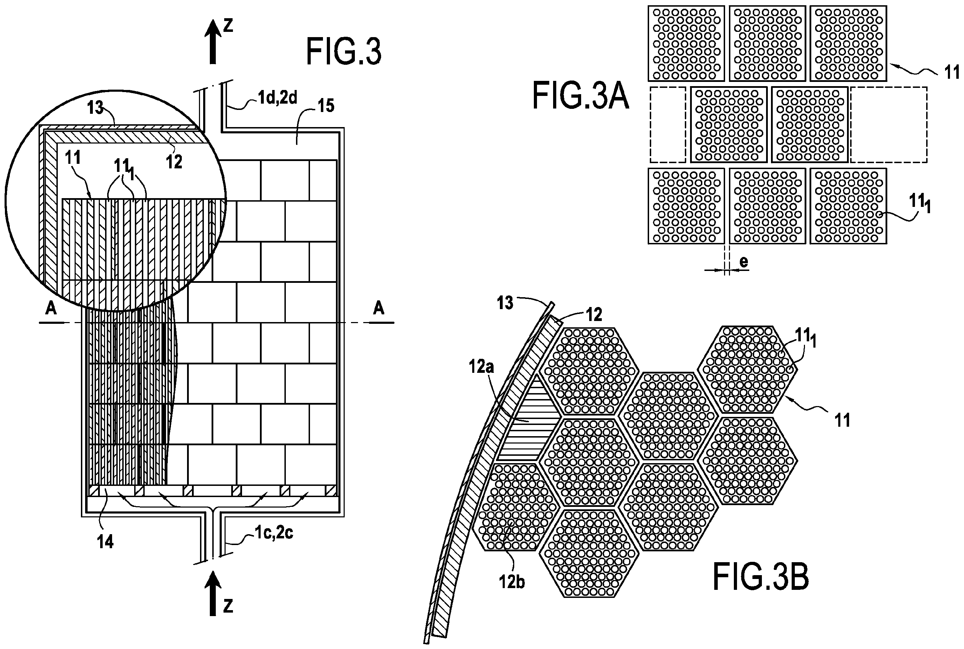

Sur la figure 3 on a représenté en coupe et en vue de côté une enceinte comportant une enveloppe externe métallique étanche 13, un système d'isolation interne 12 disposé contre la paroi de l'enveloppe externe métallique 13 et un empilement de blocs ou briques de matériaux réfractaires 11 présentant des canaux verticaux $11_1$ sous la forme de perforations, de préférence à section circulaire de diamètre de 2 à 15 mm, les traversant intégralement et agencés de manière sensiblement uniforme, plan par plan, sur toute la section horizontale de ladite première enceinte, comme détaillé sur les figures 3A et 3B.

Les canaux $11_1$ de différents blocs 11 superposés sont alignés les uns par rapport aux autres de manière à permettre la circulation du gaz dans la direction longitudinale ZZ de l'enceinte 1, 2 entre les deux extrémités opposées de l'enceinte sans obstacle entre les canaux de différents blocs disposés de façon superposée dans la même direction longitudinale ZZ. Une structure de supportage largement ajourée 14, située en partie basse de ladite enceinte, permet de répartir les gaz entrant ou sortant par les conduites inférieures calorifugées attenantes 1c, 2c, de manière sensiblement uniforme sur toute la section de ladite enceinte et de les diriger ainsi de manière optimale, donc avec un minimum de pertes de charges, vers les canaux $11_1$ traversant verticalement lesdits blocs de matériaux réfractaires 11 en cas d'alimentation par le bas. De même, des espaces vides 15 sont prévus en partie haute des enceintes, de manière à permettre une bonne répartition du gaz lorsque les enceintes sont alimentées en gaz par le haut. Dans la figure 3, les gaz arrivent par le bas et sortent dans la partie haute de ladite enceinte, ce qui correspond à la phase de stockage pour la deuxième enceinte et la phase de restitution pour la première enceinte, comme explicité ci-après.

La figure 3A est une coupe horizontale partielle en vue de dessus selon le plan AA de la figure 3. Les blocs de matériaux réfractaires 11 sont carrés et perforés de multiples trous cylindriques circulaires parallèles selon la direction verticale ZZ perpendiculaire au plan de la figure. Les blocs sont avantageusement espacés les uns des autres, par exemple de e=5mm, de manière à ce que la dilatation desdits blocs, lors des changements de température, puisse se faire sans dommages, dans l'épaisseur dudit espace interstitiel, et que ce dernier puisse aussi servir, le cas échéant, de canal vertical de passage du gaz depuis le bas de l'enceinte vers le haut de l'enceinte. Les blocs de matériaux réfractaires 11 sont avantageusement en contact direct avec la paroi de l'enceinte, au niveau de l'isolation 12 de ladite enceinte, de manière à limiter les passages directs et incontrôlés des gaz chauds ou froids dans cette zone. Dans une première version de l'invention, les blocs dans les plans successifs de blocs de matériaux réfractaires sont avantageusement décalés les uns des autres d'un demi module ou demi bloc en quinconce, de manière à assurer une stabilité d'ensemble au sein de ladite enceinte, comme représenté sur la figure 3. Dans une version préférée de l'invention, les blocs sont empilés verticalement les uns sur les autres sur toute la hauteur de l'enceinte, pour constituer des chandelles indépendantes les unes des autres et distantes de 5 à 10 mm en toutes directions, ce qui autorise les dilatations lors des cycles de stockage-restitution, tout en évitant les risques d'usure au niveau des plans horizontaux AA lors desdits cycles de stockage-restitution, lorsqu'ils sont montés en quinconce comme détaillé sur la figure 3.

Sur la figure 3b, on a représenté des blocs réfractaires 11a de section hexagonale, à proximité de la paroi isolante d'une enceinte de forme cylindrique. Le raccordement avec la paroi isolante se fait soit par contact direct de l'arête d'un bloc, soit par une forme de bloc isolant 12a adaptée à la courbure, ou encore par bourrage d'un matériau isolant 12a, par exemple du même type que l'isolant 12 de ladite enceinte, soit encore par une forme de bloc réfractaire 12b adaptée à la courbure.

Le dispositif selon l'invention peut, en effet, fonctionner selon deux modes différents, à savoir :

- un premier mode, avec des cycles de stockage ou chargement, et
- un deuxième mode, avec des cycles de restitution d'énergie ou cycles de déstockage d'énergie.

Le mode de chargement ou stockage d'énergie fonctionne de la manière suivante. Initialement, le gaz inerte, tel que l'argon ou l'azote est chargé dans le dispositif, à savoir dans les deux enceintes, les turbines et compresseurs, et les canalisations ; il est à température ambiante, par exemple T=20°C.

Sur la figure 1A, on a représenté le dispositif en phase de stockage d'énergie ou rechargement d'énergie dans la première enceinte 1.

Initialement, l'installation complète est à la température ambiante T0 de 10 à 20°C, le gaz contenu dans les enceintes et canalisations étant donc à cette dite température ambiante T0 et les deux enceintes sont à une même pression initiale liée à la pression de chargement, par exemple de 1 à 1,2 bara (bar absolu).

On réchauffe alors la masse de matériaux réfractaires à l'intérieur de la seconde enceinte 2 jusqu'à une température T2 de 250°C. Pour ce faire, on fait circuler en boucle fermée le gaz de la deuxième enceinte entre ses extrémités supérieure $2_1$ et inférieure $2_2$ que l'on réchauffe à l'extérieur de l'enceinte à l'aide du premier réchauffeur 5a, qui chauffe le gaz à l'intérieur de la canalisation de réchauffement $5a_3$ assurant la boucle entre les extrémités inférieure $2_2$ et supérieure $2_1$ de la seconde enceinte à l'extérieur de celle-ci. On fait circuler le gaz dans la canalisation de chauffage $5a_3$ grâce à un ventilateur $5a_5$ et le premier réchauffeur 5a comprend une première résistance $5a_1$. Une vanne $5a_4$ permet d'isoler le premier réchauffeur 5a lorsqu'il est hors service en fin de préchauffage initial, évitant ainsi les transferts et recirculation indésirables de gaz en cycle normal.

Lorsque toute la masse de matériaux réfractaires dans la deuxième enceinte 2 est portée à la température T2 de 250°C, on ferme la vanne $5a_4$ et on envoie le gaz par l'intermédiaire de la seconde conduite supérieure 2d dans le premier compresseur 30, de manière à le réchauffer à la température T1 de 300 à 600°C, par exemple 400°C en sortie dudit premier groupe 30 en mode compresseur. Un gradient de pression s'établit entre les deux enceintes, la première enceinte étant portée à la pression P1 de 20 à 300 baras (bar absolu, 2MPa à 30MPa), plus particulièrement de 30 à 150 baras et la pression P2 dans la deuxième enceinte étant réduite à environ 10 à 100 baras (1MPa à 10MPa) plus particulièrement de 20 à 50 baras.

Dans la première enceinte, la partie supérieure 1a de matériau réfractaire tend donc vers la température T1 de 400°C tandis que la partie inférieure 1b s'établit à une température T'1 de 20 à 100°C.

En sortie à l'extrémité inférieure $1_2$ de la première enceinte, le gaz doit être détendu par le deuxième groupe 40 en mode moteur thermodynamique pour être rétabli à la pression P2 de la deuxième enceinte avant d'être réintroduit dans la deuxième enceinte, détendu et refroidi à une température T3 en bas de la deuxième enceinte. Dans la mesure où l'énergie stockée par le système est liée au gradient de température T1-T3, on a intérêt à établir une température T3 la plus basse possible. Pour ce faire, on a intérêt à introduire et rentrer dans le deuxième groupe 40 en mode moteur thermodynamique un gaz à une température la plus basse possible. C'est pourquoi en sortie à l'extrémité inférieure $1_2$ de la première enceinte, on refroidit le gaz de la température T'1 à la température T0 de 10 à 20°C à l'aide d'un échangeur 6 avant de l'introduire dans la turbine 40.

Au fur et à mesure des différents cycles de circulation du gaz lors du fonctionnement en mode de stockage, la partie supérieure 1a de matériaux réfractaires de la première enceinte chaude à la température T1 de 400°C occupe un volume de plus en plus important de l'enceinte, c'est-à-dire que le gaz chaud introduit à l'extrémité supérieure $1_1$ de la première enceinte 1 cède ses calories auxdits matériaux réfractaires et réchauffe un volume de plus en plus important de matériau réfractaire de la première enceinte. Un front 1e qui correspond en fait à une zone de transition de température est schématisé par une ligne sur les figures 1 et 2. Les parties supérieure 1a chaude à la température T1 et inférieure 1b froide à la température T'1 de 20 à 100°C, se déplacent progressivement vers le bas au fur et à mesure des cycles de circulation du gaz lors du stockage. Inversement, la partie inférieure 2b de la deuxième enceinte à la température T3 d'au moins -50 à -20°C occupe un volume de plus en plus important de l'enceinte 2. Le front 2e schématisant une ligne de séparation qui est en fait une zone de transition entre la partie inférieure 2b à la température T3 et une partie supérieure 2a à la température T2, se déplace progressivement vers le haut au fur et à mesure des différents cycles de circulation du gaz.

Le premier groupe 30 en mode compresseur est actionné par un moteur électrique 51 qui consomme une énergie électrique $E_1$. Le deuxième groupe 40 en mode détente est couplé au premier groupe 30 en mode compresseur, de sorte que le deuxième groupe 40 fournit de l'énergie au premier groupe 30 en complément à l'énergie fournie par le premier moteur 51.

Au cours des cycles successifs de circulation du gaz en mode de stockage d'énergie, la température de la partie supérieure 2a de la deuxième enceinte a tendance à diminuer à une température T'2 inférieure à T2, c'est-à-dire en dessous de 200°C par exemple, de 150 à 175°C.

Pour pallier cette baisse de température de la partie supérieure 2a de la deuxième enceinte, on réchauffe avantageusement le gaz sortant à l'extrémité supérieure $2_1$ de la deuxième enceinte à l'aide d'un second réchauffeur 5b comprenant une deuxième résistance $5a_2$ permettant de chauffer le gaz circulant dans la conduite supérieure 2d pour le maintenir à une température T2 de 200°C avant qu'il n'arrive dans le premier groupe 30 en mode compresseur. De même, on règle le moteur 51 de manière à maintenir la température de sortie du premier groupe 30 en mode compresseur à la température T1 constante de l'ordre de 400°C.

Pendant toute la durée des différents cycles de stockage d'énergie, on mesure la température du gaz en entrée du second réchauffeur 5b et on ajuste en temps réel la quantité d'énergie électrique $E_2$ injectée par seconde dans le second réchauffeur 5b pour porter le gaz à la température sensiblement constante T2. La puissance injectée dans l'installation pendant ces cycles de stockage correspondra donc à l'énergie électrique $E_1$ alimentant le moteur électrique 51, additionnée de l'énergie électrique $E_2$ alimentant le second réchauffeur 5b.

Comme mentionné précédemment lors des cycles de stockage d'énergie, il est nécessaire de refroidir le gaz sortant à l'extrémité inférieure $1_2$ de la première enceinte pour diminuer sa température jusqu'à la température T0 avant de le détendre dans la turbine 40. Ceci se fait à l'aide de l'échangeur 6. L'échangeur de chaleur 6 est alimenté par un fluide de refroidissement tel que de l'eau ou de l'air froid à 10-20°C pour refroidir le gaz sortant de la première enceinte à la température T'1 de 20 à 100°C et le porter à la température T0 de 10 à 20°C. Le fluide de refroidissement de l'échangeur 6 sort de l'échangeur 6 en 6d à une température de 30 à 100°C selon le débit d'air ou d'eau de refroidissement. L'échangeur thermique 6 libère donc une énergie thermique $E_3$ sous forme d'eau réchauffée à 30-100°C. Cette énergie thermique $E_3$ est une énergie qui ne peut pas être stockée dans le système, mais qui peut être récupérée soit au sein d'une pompe à chaleur ou encore servir dans des processus industriels ou encore pour du réchauffage urbain. $E_3$ constitue donc, lors d'un cycle complet de stockage, une perte qui affecte le rendement global du dispositif.

Pour stabiliser le système et optimiser son fonctionnement lors de la succession des différents passages du fonctionnement en mode de stockage au fonctionnement en mode de restitution d'énergie, il est préférable d'interrompre le stockage avant que la première enceinte soit entièrement portée à la température T1 ou que la deuxième enceinte soit entièrement portée à la température T3.

En pratique, on maintient dans la première enceinte une partie inférieure 1b représentant 10 à 20% du volume total de l'enceinte qui reste à la température T'1 de 20 à 100°C. Parallèlement, on maintient une partie supérieure 2a de la deuxième enceinte à la température T2 ou proche de la température T2, c'est-à-dire que l'on interrompt le stockage lorsque la partie inférieure 2b de la deuxième enceinte à la température de -50 à -20°C représente 80 à 90% du volume de la deuxième enceinte.

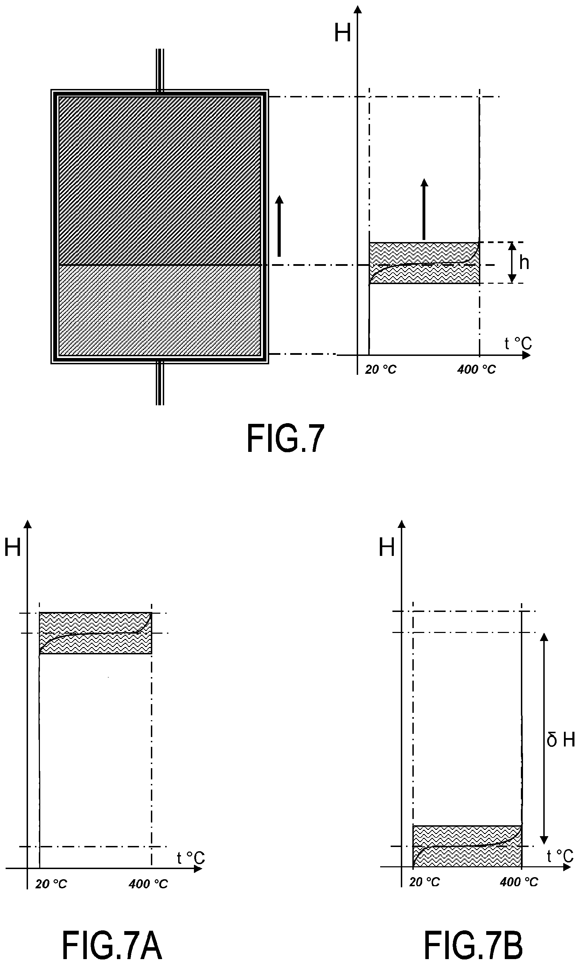

Ce volume de 10 à 20% correspond en fait au volume de la couche de transition thermique de hauteur a décrite plus loin en référence aux figures 7.

Sur la figure 1B, on a représenté le cycle de restitution d'énergie stockée au sein de la première enceinte 1, sous forme d'énergie électrique Er.

Initialement, en fin de phase de chargement, lorsque le moteur 51 est interrompu, le gaz est immobile et la pression est équilibrée dans les deux enceintes 1 et 2, à une valeur intermédiaire de 30 à 100 baras (3MPa à 10MPa).

Pendant une phase de démarrage du mode de fonctionnement en cycle de restitution de déstockage d'énergie, on actionne le moteur électrique 51 qui actionne les premier et deuxième groupes 30 et 40 qui lui sont couplés, de manière à ce que s'établisse un gradient de pression entre les deux enceintes 1 et 2 respectivement avec une pression P'1 supérieure à P1 dans la première enceinte 1 et une température P'2 inférieure à P2 dans la deuxième enceinte 2.

En effet, lors du démarrage, le deuxième groupe 40 en mode compresseur aspire le gaz en provenance de la seconde enceinte et l'envoie dans la première enceinte, ce qui augmente la pression dans ladite première enceinte, alimentant ainsi en gaz le premier groupe 30 en mode moteur thermodynamique, pour revenir enfin dans la seconde enceinte et continuer son cycle de circulation. Dès que le premier groupe 30 atteint une inertie de fonctionnement en mode thermodynamique suffisante pour actionner le deuxième groupe 40 fonctionnant en mode compresseur, on arrête d'alimenter le moteur électrique 51.

En fonctionnement établi, le deuxième groupe 40 aspire le gaz de la partie supérieure de la première enceinte vers la deuxième enceinte en réalisant un refroidissement et une détente du gaz. Pour optimiser le fonctionnement de l'installation, il est souhaitable que le gaz en sortie du deuxième groupe 40 arrive sensiblement à la même température T2 que la température du gaz en partie supérieure de l'enceinte 2 en fin de cycle de stockage. Pour ce faire, les pertes au niveau des groupes 30 et 40 sont telles que P'1/P'2 > à P1/P2. En pratique, P'1 est de 60 à 400 baras et P'2 de 15 à 90 baras.

Lorsque le gradient de pression P'1 / P'2 est établi, on coupe le moteur 51. Le gaz dans la partie inférieure 2b de la deuxième enceinte est à la température T3 de -50 à -20°C qui était sa température en fin de cycle de stockage. Et le gaz est convoyé en direction du deuxième groupe 40 afin d'y être recomprimé à la pression P'1. Il est concomitamment réchauffé à la température T4, laquelle température T4, à cause des pertes du deuxième groupe 40 est supérieure à la température T0. Typiquement T4 est de l'ordre de 30 à 100°C.

Le gaz à la température T4 supérieure à T0 en sortie du deuxième groupe 40 doit donc être refroidi à la température T'1 à l'aide de l'échangeur thermique 6 avant d'être envoyé à l'extrémité inférieure $1_2$ de la première enceinte 1, dont la partie inférieure 1b se trouve à la température T'1 de 20 à 100°C.

Le refroidissement du gaz en sortie du deuxième groupe 40 lors du cycle de déstockage a pour effet qu'une énergie thermique E4 est perdue par réchauffement du liquide de refroidissement. Mais, ce refroidissement du gaz de la température T4 à T'1 permet de faciliter, pendant les cycles de stockage d'énergie, le refroidissement du gaz en sortie de l'extrémité inférieure $1_1$ de la première enceinte de la température T'1 jusqu'à la température T0 en aval de l'échangeur thermique afin que le gaz arrive à température ambiante T0, en entrant dans le deuxième groupe 40 lors des cycles de stockage d'énergie. Globalement, la perte de l'énergie thermique E4 lors des cycles de déstockage est compensée par une perte d'énergie thermique E3 au niveau de l'échangeur 6 moins importante lors des cycles de stockage. Les énergies thermiques E3 + E4 correspondent globalement aux pertes de l'installation liées au gradient T4-T0 et dues aux pertes au niveau des premier et deuxième groupes 30 et 40.

L'énergie restituée par le système $E_R$ correspond à l'énergie libérée par le premier groupe 30 qui actionne un générateur-alternateur électrique 52 qui permet de restituer de l'énergie sous forme d'électricité. Globalement, $E_R$ correspond plus précisément à l'énergie libérée par le premier groupe 30 en mode moteur thermodynamique diminuée de l'énergie consommée par le deuxième groupe 40 qui lui est couplé. D'autre part, le rendement global de l'installation entre les cycles de stockage et déstockage s'écrit de la manière suivante : $E_R = E1+E2-(E_3+E_4)-E_5$. $E_5$ représentant les pertes à travers l'isolation des enceintes, des conduites, des premier et deuxième groupes 30 et 40 et des divers accessoires.

Les pertes E3+E4+E5 représentent 20 à 40% par rapport aux énergies $E_1+E_2$ fournies, le rendement global de l'installation et du procédé de restitution d'énergie étant donc de 60 à 80%.

Pour optimiser le rendement énergétique de l'installation, il est avantageux de ne pas réchauffer complètement la première enceinte à la température T1 en fin de cycle de stockage, de manière à conserver une couche de transition thermique dans la partie inférieure 1b à température T0 ou T'1, et conserver une couche de transition thermique dans la partie supérieure 2b de la deuxième enceinte à la température T2. De même, lors des cycles de restitution d'énergie en fin de cycle, on arrête le déstockage avant que la première enceinte ne soit complètement refroidie et la deuxième enceinte ne soit complètement réchauffée de manière à conserver une couche de transition thermique dans la partie supérieure 1a correspondant à 10 à 20% du volume de l'enceinte qui reste à la température T1, et concomitamment, une couche de transition thermique dans la partie inférieure 2b de la deuxième enceinte qui reste à la température T3, cette couche représentant également 10 à 20% du volume de la deuxième enceinte.

Cette couche de transition thermique dans la partie supérieure 2b de la deuxième enceinte à température T2 facilite le rétablissement du gradient de pression entre les deux enceintes P'1/P'2 en début de cycle de restitution d'énergie correspondant aux mêmes températures T1/T2 respectivement dans les première/deuxième enceintes.

Le maintien d'une couche de transition thermique à une extrémité des première et deuxième enceintes en fin de cycle de stockage et en fin de cycle de restitution est aussi avantageux en termes de rendement énergétique global de l'installation. En effet, si l'on voulait réchauffer entièrement la première enceinte en fin de cycle de stockage, le gaz sortant à l'extrémité inférieure $1_1$ de la première enceinte pendant le réchauffement du volume correspondant à la couche de transition thermique à l'extrémité inférieure de la première enceinte, sortirait à une température supérieure à la température T'1, ce qui impliquerait une énergie de refroidissement E3 supérieure et donc des pertes énergétiques supérieures.

Parallèlement, si en fin de cycle de restitution, on voulait réchauffer entièrement l'extrémité inférieure $2_2$ de la deuxième enceinte, le gaz sortant à l'extrémité inférieure $2_2$ de la deuxième enceinte sortirait à une température supérieure à T3 et arriverait en aval de l'échangeur thermique 6 à une température T4 augmentée, ce qui impliquerait une énergie thermique de refroidissement E4 supérieure et donc des pertes énergétiques là encore supérieures.

En outre, le maintien d'une partie inférieure 1b à la température T'1 en fin de stockage et une partie supérieure 2a à la température T2 dans la deuxième enceinte en fin de stockage facilite le démarrage du cycle de restitution, lequel nécessite une mise en oeuvre du moteur 51 pendant un temps plus réduit pour établir un fonctionnement stable avec les gradients de température T1 et T2 dans les première et deuxième enceintes respectivement aux pressions P'1 et P'2 lors de la restitution. De même, le maintien d'une couche supérieure 1a chaude à la température T1 dans la première enceinte en fin de restitution et le maintien d'une couche inférieure froide 2b à la température T3 en fin de cycle de restitution, facilite le démarrage du cycle de stockage ultérieur, en diminuant l'énergie électrique E2 nécessaire pour maintenir le gaz entrant dans le premier groupe 30 à la température T2.

Les dimensionnements des premier cylindre 30b et second cylindre 40b sont différents, le premier cylindre 30b étant plus grand que le second cylindre 40b, compte tenu des pressions et températures de gaz auxquelles ils sont soumis. En effet, le volume d'un gaz augmentant avec sa température, le cylindre fonctionnant avec des gaz entrant à température élevée devra être de taille plus importante. Or, lors de la phase de stockage, le premier groupe 30 fonctionne à température T1 de 300 à 500°C, tandis que le deuxième groupe 40 fonctionne à température T3 d'environ -50°C à -20. Il y a lieu de relever que la mise en oeuvre d'un petit deuxième groupe 40 pendant la phase de stockage facilite son entraînement par le premier groupe 30. De même, la mise en oeuvre d'un petit deuxième groupe 40 réduit les pertes énergétiques et l'énergie $E_R$ correspond à l'énergie libérée par le premier groupe 30 diminuée de l'énergie consommée par le deuxième groupe 40. Il y a donc un intérêt supplémentaire à mettre une température T3 la plus basse possible en entrée du deuxième groupe 40 pour également diminuer la consommation d'énergie affectant le rendement global énergétique du système.

La mise en oeuvre d'un refroidissement à la fois lors des cycles de stockage d'énergie et de déstockage d'énergie en aval de l'extrémité inférieure de la première enceinte lors du stockage d'énergie et en amont de l'extrémité inférieure de la première enceinte lors de la restitution d'énergie, à l'aide d'un même échangeur thermique, permet de diminuer la taille de l'échangeur thermique en comparaison d'un mode de réalisation dans lequel on ne refroidirait pas, par exemple lors des cycles de restitution d'énergie, le gaz dans un échangeur thermique en aval de l'extrémité inférieure de la première enceinte.

Au fur et à mesure du déroulement successif des cycles de circulation du gaz lors de la phase de restitution d'énergie, le front 1e séparant la partie inférieure 1b froide à T'1 et la partie supérieure 1a chaude à T1 de la première enceinte se déplace progressivement vers le haut, tandis que le front 2e séparant la partie supérieure chaude 2a à température T2 de la partie inférieure 2b froide à température T3 de la deuxième enceinte se déplace progressivement vers le bas.

On notera que la mise en service de l'échangeur 6 sur le circuit de retour du gaz entre le deuxième groupe 40 et la partie inférieure de la première enceinte 1, d'une part et, d'autre part, le fonctionnement du premier groupe 30 sont ajustés de manière à maintenir lesdites températures T1 et T2 à des valeurs constantes respectivement, par exemple de 1 300°C et 500°C, pendant tout le cycle de restitution d'énergie.

Il y a lieu également d'observer que, selon une caractéristique originale de la présente invention essentielle, les températures T1 et T2 sont constantes et identiques sur les cycles de chargement/stockage et déchargement/restitution d'énergie.

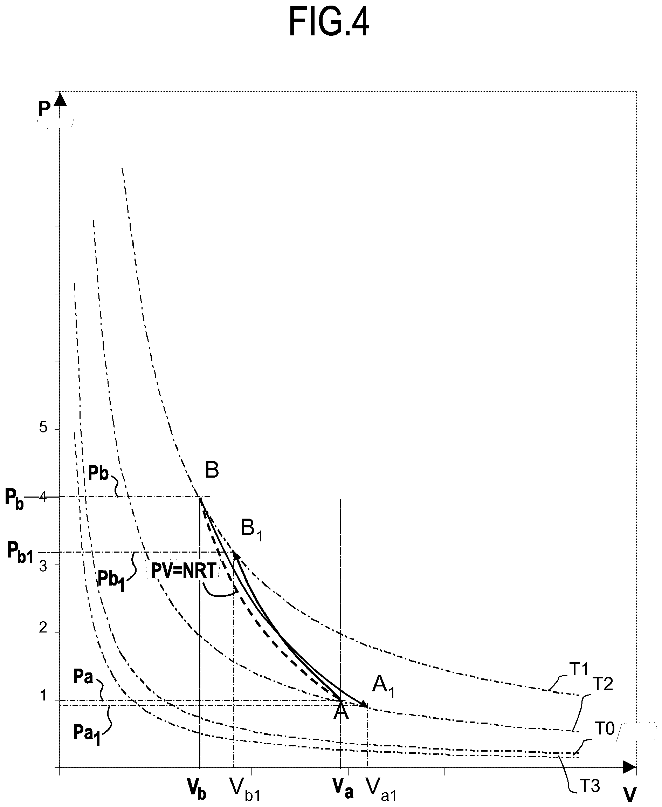

Sur la figure 4, on a représenté un graphique correspondant à un cycle thermodynamique dans lequel les abscisses représentent les volumes et les ordonnées représentent les pressions absolues (bara). On a représenté quatre isothermes correspondant respectivement à :

- T0 (température ambiante de 20°C),
- T1 (température première enceinte : 400°C),
- T2 (température chaude seconde enceinte : 200°C),
- T3 (température froide seconde enceinte : -50°C /-20°C).

Entre les points A et B, on a représenté un cycle de compression-détente adiabatique d'un gaz parfait selon la loi : $PV^\gamma$ = constante, entre les températures T1 et T2. Pour une machine réelle, le comportement est différent et, dans le cas d'une compression adiabatique entre T2 et T1, la courbe suivie est AB1, qui montre que la température T1 sera atteinte pour une pression Pb1 inférieure à Pb et un volume Vb1 supérieur à Vb. De même, dans une détente adiabatique, la température T2 est atteinte pour une pression Pa1 inférieure à Pa et un volume Va1 supérieur à Va.

Il convient de noter que pour une gestion efficace de la chaleur dans les 2 enceintes, il importe qu'au niveau de la partie haute de chacune de ces enceintes le gaz soit à des températures sensiblement identiques lors de la phase de stockage et lors de la phase de restitution. Pour expliciter ce point, considérons par exemple la partie haute de la première enceinte. Durant la phase de stockage, le gaz chaud pénètre depuis le haut dans le stock de réfractaires. La température des solides ne peut pas dépasser celle du gaz mais seulement s'en approcher au mieux. Durant la phase de restitution, la température du gaz qui sort en partie haute du stock de matériaux réfractaires de la première enceinte peut au mieux être égale à celle desdits matériaux réfractaires. On peut faire des remarques identiques pour la seconde enceinte. Or, dans le but d'obtenir le meilleur rendement possible il importe au niveau de la première enceinte, que toute la chaleur du gaz injectée durant la phase de stockage soit exploitée au mieux durant la phase de restitution, et au niveau de la seconde enceinte que toute la chaleur récupérée du gaz durant la phase de stockage soit réutilisée au mieux durant la phase de restitution. Autrement dit, on a intérêt à rechercher des températures T1 et T2 qui soient aussi voisines que possible (idéalement identiques) lors des phases de stockage et de restitution.

On vient de voir sur la figure 4 que si on vise les mêmes températures T1 et T2 lors d'une détente ou d'une compression avec des machines réelles, les rapports des pressions sont différents. Ceci signifie que les rapports des pressions des ensembles moteur-compresseur utilisés lors des phases de stockage et de restitution doivent être différents. Par exemple sur la figure 4, lors du stockage la pression haute est $P_{b1}$ et la pression basse $P_a$, alors que durant la phase de restitution la pression haute est $P_b$ et la pression basse $P_{a1}$.

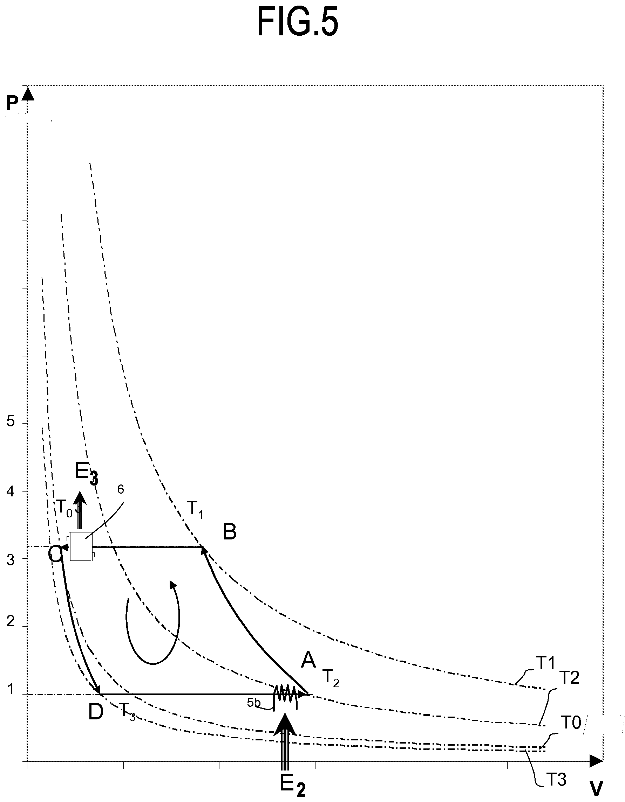

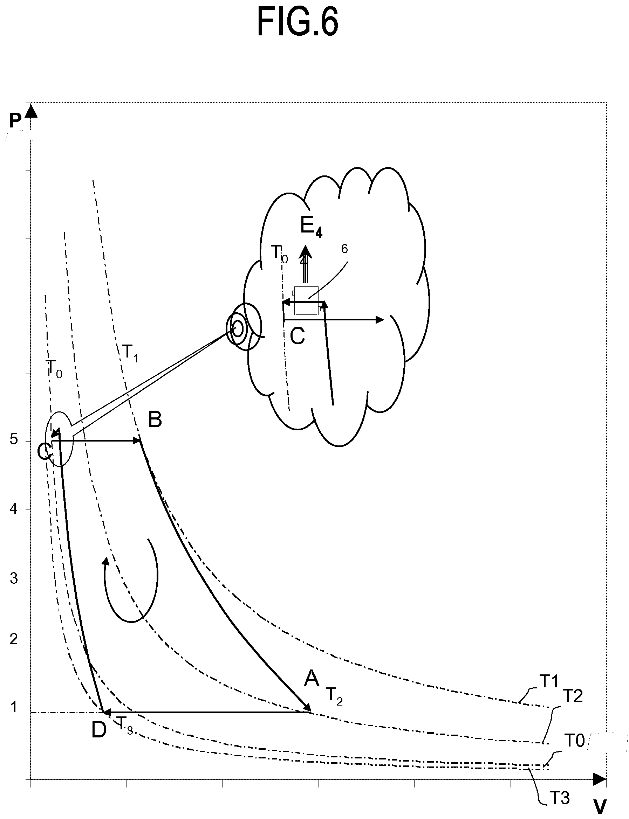

Dans les figures 5 et 6, on a représenté les cycles thermodynamiques correspondant respectivement aux cycles de stockage et de restitution de l'énergie dont les installations et procédés sont décrits en liaison avec les figures 1 et 2. Ces cycles thermodynamiques correspondent à un volume unitaire de gaz, par exemple 1 m$^3$, effectuant un cycle complet durant lequel il acquiert de l'énergie dans une enceinte ou un compresseur, puis le restitue dans un moteur thermodynamique, ou l'autre enceinte. Ledit volume unitaire effectue ce cycle thermodynamique en un temps très court par rapport à la durée complète d'un cycle de stockage ou de restitution, et effectue ainsi des centaines ou des milliers, voire des dizaines de milliers de cycles thermodynamiques, c'est-à-dire repasse autant de fois dans le compresseur, le moteur thermodynamique, les conduites et chacune des enceintes.

La figure 5 illustre la phase de stockage décrite dans la figure 1. Le gaz en provenance de la partie haute de la seconde enceinte entre dans le premier groupe 30 en mode compresseur à la température T2 au point A. Il est comprimé et ressort à la température T1 au point B. Il pénètre la masse de réfractaire 11 de la première enceinte 1, traverse la masse de réfractaire en cédant ses calories, ce qui engendre une descente progressive du front de température vers le bas. le gaz ressort en partie basse de ladite première enceinte en 6a à une température de l'ordre de 20/100°C, puis passe dans l'échangeur 6 où il cède à l'extérieur l'énergie E3 pour ressortir dudit échangeur à une température sensiblement constante T0 correspondant à la température ambiante de 20°C, correspondant au point C du diagramme. Il passe ensuite dans le moteur thermodynamique du deuxième groupe 40 et cède son énergie au premier groupe 30 en mode compresseur, et il ressort du deuxième groupe 40 en mode moteur thermodynamique dans la canalisation 2c à la température T3 (-30°C), correspondant au point D du diagramme. Il entre enfin en partie basse de la seconde enceinte, ou il récupère des calories au sein de la masse de réfractaires qu'il parcourt du bas vers le haut, ce qui engendre une remontée progressive du front de température 2e vers le haut. Le gaz ressort enfin de la seconde enceinte en partie haute et est dirigé vers le compresseur 30, dans lequel il rentre à la température T2, avec le cas échéant un passage dans le réchauffeur 5b, où il reçoit le cas échéant un quota d'énergie E2 visant à réajuster ladite température du gaz pour atteindre la valeur T2. Le gaz est alors revenu au point A du diagramme et effectue alors un nouveau cycle.

Le cycle thermodynamique de restitution de l'énergie détaillé sur la figure 6 se déroule comme suit. Le gaz à haute température T1 quitte la première enceinte 1 par le haut, ce qui correspond au point B du diagramme. Le gaz passe ensuite dans le premier groupe 30 en mode moteur thermodynamique où il restitue l'énergie au générateur électrique $E_R$ et se retrouve au point A du diagramme à la température T2. Puis il entre par le haut de la seconde enceinte et cède ses calories à la masse de réfractaires 11, ce qui engendre une descente progressive du front de température 2e vers le bas, et ressort par le bas de ladite enceinte à une température T3 correspondant au point D du diagramme. Le gaz passe ensuite dans le deuxième groupe 40 en mode compresseur et ressort à une température T4 supérieure à la température T0 souhaitée : il passe alors dans l'échangeur de température 6 où il restitue à l'extérieur le quota d'énergie E4, pour se retrouver à la température T0, donc au point C dudit diagramme. Enfin, il pénètre bas dans la première enceinte où il récupère de l'énergie et s'échauffe pour atteindre le point B dudit diagramme, ce qui engendre une remontée progressive du front de température 1e vers le haut, donc un refroidissement global de ladite première enceinte.

Sur la figure 7 on a représenté, sur la gauche en coupe en vue de côté, la première enceinte et le front montant 1e séparant la zone inférieure à la température d'environ 20°C, et la partie supérieure à la température d'environ 400°C. Ce front montant correspond en fait à une zone de transition d'une hauteur h comme détaillé sur le graphique droit de la même figure 7. Lors de la phase de stockage de l'énergie, la zone de transition se déplace vers le bas (figure 7B), et lors de la phase de restitution elle se déplace vers le haut (figure 7A). De manière à rester dans les plages de fonctionnement des moteurs thermodynamiques correspondant à leur meilleur rendement, avantageusement on ne charge complètement, ni ne décharge complètement la première enceinte, ce qui correspond, comme détaillé sur la figure 7B, à limiter le cycle de charge/décharge à la hauteur maximale $\delta H_1$, correspondant par exemple à 80-90% de la hauteur totale, donc de la capacité calorifique totale de ladite première enceinte. De même, cette zone de transition existe aussi dans la seconde enceinte mais elle correspond à des températures différentes, par exemple -30°C en partie basse, et 200°C en partie haute. Le pourcentage de la masse calorifique utilisé correspond alors à une hauteur $\delta H_2$, ledit pourcentage utilisé étant de préférence sensiblement identique à celui de ladite première enceinte, c'est-à-dire 80-90%.

Grâce à cette configuration incluant 2 enceintes à des températures différentes, dont les masses de matériaux réfractaires ne sont utilisées qu'à 80-90% de leur capacité calorifique, il est possible d'obtenir un rendement global très bon, de l'ordre de 60 à 80%.

Ceci est premièrement dû au fait que l'énergie est alternativement pompée et récupérée entre 2 niveaux de température T2 à T1 qui sont tous les deux largement supérieurs à la température ambiante. On sait d'après le théorème de Carnot que l'efficacité des machines thermiques s'améliore lorsque la température de la source chaude augmente.

Une seconde raison réside dans l'égalité des températures T1 et T2 durant les 2 phases de stockage/restitution, obtenues en utilisant des ensembles turbine-compresseur différents travaillant avec des rapports de pression différents (P1/P2 et P'1/P'2).

Une troisième raison de la bonne efficacité globale provient du fait que durant la phase de stockage les pertes du premier groupe 30 en mode compresseur sont extraites sous forme de chaleur dans le gaz. Cette énergie est stockée dans le réfractaire de la première enceinte 1 au même titre que la chaleur pompée depuis la seconde enceinte. Cette perte d'énergie du compresseur chaud est en grande partie récupérée sous forme de travail utile durant la phase de restitution.

La quatrième raison résulte de l'utilisation de régénérateurs pour échanger la chaleur avec le gaz. Il est en effet possible d'aménager des ensembles de pièces réfractaires capables de fonctionner à très haute température et présentant une très grande surface d'échange entre le gaz et les solides. Ceci permet d'approcher au mieux l'égalité des températures T1 et T2 durant les 2 phases. La capacité de stockage est liée à la masse de réfractaire. La disposition selon l'invention présente l'avantage que toute la quasi-totalité de la masse de réfractaire est mise à profit pour jouer un double rôle : stockage de la chaleur et échange de chaleur avec le gaz.

La dernière raison du bon rendement global résulte du fait que le froid produit dans la détente dans le premier groupe 30 en mode moteur thermodynamique durant la phase de stockage est également stocké dans l'enceinte 2. Durant la phase de restitution ceci permet de refroidir le gaz avant la compression par le deuxième groupe 40 en mode compresseur, ce qui diminue l'énergie absorbée par ce deuxième groupe 40 en mode compresseur, énergie qui vient en diminution de l'énergie restituée $E_R$.

La puissance d'une machine thermodynamique est donnée par la formule :

$$W = m \cdot Cp \cdot (T2 - T1)$$

Où m est le débit massique de gaz en kg/s, Cp la capacité calorifique du gaz en J/kg/K, T1 la température du gaz à l'entrée et T2 celle à la sortie. Pour un moteur thermodynamique, T2 < T1 et W est alors négatif (puissance extraite du gaz). Pour un compresseur W est positif (puissance fournie au gaz).

Dans la formule thermodynamique : $PV^\gamma$ = constante,

$\gamma$=1.66 pour un gaz mono-atomique,

$\gamma$=1.4 pour un gaz di-atomique, et

γ=1.33 pour un gaz tri-atomique,

Le rapport des températures T1, T2 dépend du rapport des pressions P1, P2 ou P'1, P'2 selon la formule :

$$\frac{T1}{T2} = \left(\frac{P1}{P2}\right)^{\frac{\gamma-1}{\gamma}}$$

On constate que pour un rapport de températures donné, le rapport des pressions est plus faible pour un gaz monoatomique ($\gamma$ = 1,66) que pour un gaz diatomique ($\gamma$ = 1,4) ou triatomique ($\gamma$ = 1,33). Ceci présente un intérêt pratique pour la conception des enceintes. En effet, l'épaisseur des parois des enceintes est liée à la pression maximale du gaz. De plus, ce procédé ayant la capacité de stocker de très grandes quantités d'énergie mettra en oeuvre des enceintes de grandes dimensions. On a donc économiquement intérêt à rechercher le niveau minimal de pression interne du gaz. Un moyen simple de parvenir à ce résultat est de limiter le taux de compression du gaz, donc de choisir de préférence un gaz monoatomique.

Ainsi, le meilleur cycle sera obtenu avec un gaz mono-atomique, tel l'hélium, le néon, l'argon ou les autres gaz rares de masse molaire plus élevée.

Les gaz di-atomiques tel l'azote et tri-atomique tel l'air ou le CO2 sont très abondants et bon marché, mais à haute température, sont agressifs vis-à-vis des métaux constituant l'enveloppe des enceintes, les canalisations ou les aubes des turbines et compresseurs, c'est pourquoi on utilise avantageusement comme gaz au sein du dispositif un gaz neutre totalement inerte vis-à-vis des éléments métalliques du dispositif, tel l'hélium, le néon, l'argon ou les autres gaz rares de masse molaire plus élevée. Hélium, néon et argon sont présents dans l'air ambiant en pourcentages significatifs et ils sont disponibles en grande quantité à des couts acceptables. Dans ces trois gaz, l'argon représente le gaz le plus performant pour son utilisation dans le dispositif selon l'invention, car il est mono-atomique, il est inerte à haute et très haute température vis-à-vis des éléments métalliques composant le dispositif selon l'invention et il présente une masse molaire élevée ainsi qu'un coût d'acquisition faible.

Ledit premier matériau réfractaire de la première enceinte est par exemple de la chamotte, encore appelée argile de deuxième cuisson (« fire clay ») capable de résister à 1200 °Cm ou encore un produit à haute teneur en alumine et/ou magnésie. Le deuxième matériau réfractaire dans la deuxième enceinte peut être de l'argile de première cuisson, du béton réfractaire, voire un matériau naturel tel du gravier siliceux.

Comme mentionné précédemment, les matériaux réfractaires 11 se présentent sous forme de briques perforées par des canaux parallèles de 5 à 20 mm de diamètre et traversants de part en part, et disposés de manière à permettre la circulation et le passage du gaz à travers le canaux dans la direction longitudinale de l'enceinte.

Les divers types de matériaux réfractaires à très haute température disponibles à des conditions économiques acceptables sont listés dans le tableau ci-dessous.

| Produit | Composition | T limite | Densité Kg. m$^{-3}$ | capacité calorifique (J * kg$^{-1}$ * K$^{-1}$) | capacité calorifique (kJ * m$^{-3}$ * K$^{-1}$) |
|---|---|---|---|---|---|
| chamotte. | Argile cuite (35% $Al_2O_3$) | 1250°C | 2000 | 1000 | 2000 |
| Magnésie | MgO | 1800°C | 3000 | 1200 | 3600 |
| Dolomie | CaO-MgO | 1800°C | 2700 | 1100 | 2970 |
| Mullite | 70% $Al_2O_3$ | 1700°C | 2600 | 1088 | 2830 |
| carbone | C | 2200°C | 2200 | 1300 | 2860 |

La chamotte reste le plus économique de tous ces produits, mais sa capacité calorifique reste très nettement inférieure à celle des autres.

De plus, l'énergie stockée dans un mètre cube de réfractaire est donnée par la formule : E = V . Cp . (T - T0) dans laquelle E est exprimé en joules, V est le volume de réfractaire chauffé, Cp la capacité calorifique en J/m3/K, T la température de chauffage et T0 la température initiale avant chauffage.

On constate ainsi que plus la température de stockage T est élevée, plus l'énergie stockée par unité de volume de réfractaire est importante.

Ainsi, la magnésie présente la meilleure performance en terme de capacité calorifique volumique avec une valeur Cp= 3 600 kJ * m$^{-3}$ * K$^{-1}$.

A titre d'exemple, un dispositif de 3000 MWh de capacité, capable de stocker et de restituer une puissance de 100 MW, correspondant à une charge en 40 heures et une restitution en 30 heures est constitué :

- d'une première enceinte cylindrique de 41m de diamètre et de 20m de hauteur, dans laquelle est installé 16500 m3 de magnésie, présentant une porosité de 25%, soit 37000t de matériaux réfractaires, et
- d'une seconde enceinte de 48m de diamètre et de 20m de hauteur dans laquelle est installé 22500 m3 de chamotte, présentant une porosité de 35%, soit 29500 t de matériaux réfractaires, un groupe de stockage composé d'un moteur électrique 51 de 100MW, un compresseur 30 de 117MW, une turbine 40 de 17MW, d'un groupe de restitution composé d'une génératrice 52 de 100MW, d'une turbine 30 de 156MW, d'un compresseur 40 de 56MW. Le volume interne de l'installation complète, y compris les conduites de raccordement, mais excluant le volume correspondant à la masse effective de réfractaire est d'environ 35000 $m^3$. Une partie du gaz est confinée au sein des matériaux isolants qui isolent les parois des enceintes des réfractaires chauds (environ 12000 m3) et seul un volume libre de 23000 m3 peut participer à la circulation du gaz. L'installation est chargée en argon avant démarrage à la pression de 1 bar, soit 2 baras, ce qui correspond à un volume de 70000Nm$^3$ dont 46000 Nm$^3$ peuvent circuler. En phase de stockage la pression est de 3 baras dans la première enceinte P1 et de 0,9 baras dans la seconde P2, tandis que durant le déchargement, ces pressions sont respectivement 3,3 (P'1) et 0,6 (P'2) baras. La température T1 s'établit à 1256°C tandis que la température T2 est de 600°C. En phase de stockage le débit de gaz dans la turbine 40 ou le compresseur 30 est de 193 Nm3/s, c'est-à-dire à un temps de cycle thermodynamique selon la figure 5 de 238 secondes, ce qui correspond à 600 cycles de circulation du gaz pour la durée d'un chargement complet. On obtient des valeurs similaires pour le cycle de déchargement.

L'énergie stockée dans les première et seconde enceintes n'est pas perdue sauf en cas d'inactivité prolongée du dispositif en chargement-déchargement, les pertes s'effectuant alors vers le milieu extérieur, principalement par le biais de l'isolant 12 desdites enceintes.

Comme le procédé intéresse essentiellement le stockage d'énergie en grande quantité, les enceintes sont relativement volumineuses ce qui veut dire que le rapport surface sur volume est faible. Les pertes thermiques pour les grandes enceintes ne représentent qu'une faible fraction de l'énergie stockée. L'isolation thermique est réalisée avec des matériaux présentant une grande porosité, comme des feutres de fibres céramiques ou des mousses céramiques. Les calculs montrent que pour l'exemple cité précédemment une isolation de 1m d'épaisseur avec des matériaux fibreux classiques permet de limiter la perte d'énergie à moins de 1% par jour.

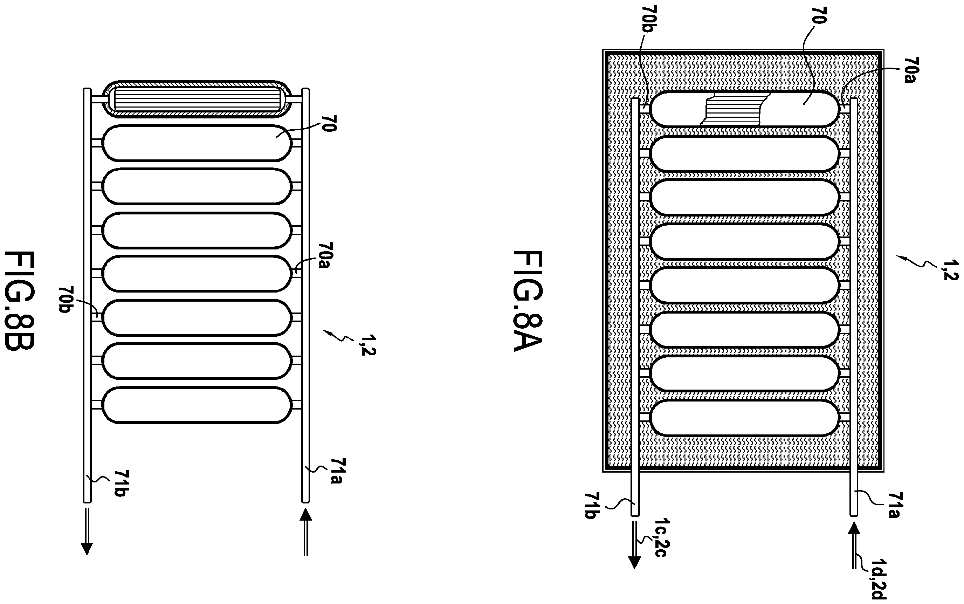

Le niveau de la température T1 (400°C) restant modeste, les enceintes 1 et 2 seront avantageusement réalisées en acier, de préférence à partir de conduites acier de grand diamètre (1 à 2m). Les enceintes seront alors constituées d'une pluralité de colonnes ou conduites verticales 70 de grande hauteur, par exemple de 12-24m de hauteur, lesdites conduites 70 étant reliées entre elles comme illustré sur les figures 8A et 8B. Toutes les colonnes seront de préférence identiques en termes de diamètre, de hauteur et de remplissage en matériau réfractaire, de manière à présenter une perte de charge identique pour chacune. Elles seront reliées entre elles en partie haute 70a à un collecteur-diffuseur supérieur 71a et en partie basse 70b à un collecteur-diffuseur inférieur 71b. L'ensemble des colonnes pourra être isolé du milieu ambiant par l'extérieur, comme représenté sur la figure 8A, ou alors chacune des colonnes peut être isolée depuis l'intérieur de ladite colonne, ce qui réduit de manière significative la capacité de charge en matériau réfractaire, mais qui permet en contre partie de faire fonctionner l'ensemble à plus haute température, car l'acier du réservoir sous-pression se trouve alors sensiblement à la température ambiante. On couple avantageusement les deux modes d'isolation intérieur-extérieur, ce qui a alors pour effet de réduire la température à laquelle est soumise la paroi en acier par rapport au système d'isolation par l'extérieur précédemment décrit en référence à la figure 8A.

L'invention a été décrite avec les premier et second groupes de compression / détente de gaz dont les axes de déplacement des pistons sont parallèles. Lorsque le premier piston se dirige vers sa culasse, le piston opposé s'en éloigne, car les bielles respectives sont reliées à un même maneton : les premier et second pistons sont alors calés en opposition de phase à 180°. Mais on reste dans l'esprit de l'invention si lesdites bielles sont associées à des manetons différents, soit en quadrature (90°), soit en phase (0°), ou encore présentant tout autre angle de déphasage. De même, si les mouvement axiaux des pistons sont perpendiculaires l'un à l'autre, et si les bielles sont reliées au même maneton du vilebrequin, les pistons sont alors en quadrature de phase (90°).

La version préférée de l'invention est le mouvement en opposition de phase avec déplacements axiaux des pistons parallèles, car le travail fourni par le piston moteur est directement transféré au piston compresseur opposé. Dans le cas de déphasage autre que 180°, l'énergie fournie par le piston moteur est transférée sous forme d'énergie cinétique de rotation au vilebrequin, pour être ensuite retransférée au piston compresseur avec le déphasage correspondant.

**Revendications**

1. Installation de stockage et restitution d'énergie **caractérisée en ce qu'**elle comprend :

A) une première enceinte calorifugée (1) remplie d'un premier matériau réfractaire poreux apte à être traversée par un gaz circulant à travers ladite première enceinte entre 2 extrémités supérieure et inférieure ($1_1$, $1_2$) de ladite première enceinte, et

B) une seconde enceinte calorifugée (2) remplie d'un second matériau réfractaire poreux apte à être traversée par un gaz circulant à travers ladite seconde enceinte entre 2 extrémités supérieure et inférieure de ladite seconde enceinte ($2_1$, $2_2$), et

C) des canalisations calorifugées (1c,2c,1d,2d) permettant la circulation de gaz en circuit fermé entre les 2 enceintes comprenant des première et seconde canalisations supérieures (1d,2d) entre les extrémités supérieures ($1_1$,$2_1$) des deux enceintes et des première et seconde canalisations inférieures (1c,2c) entre les extrémités inférieures ($1_2$,$2_2$) des deux enceintes , et

D) une unité de compression et détente de gaz (50) comprenant

D1) au moins un premier groupe de compression/détente de gaz (30) intercalé entre les extrémités supérieures ($1_1$, $2_1$) desdites première et seconde enceintes (1,2) auxquelles il est relié par des première et respectivement seconde canalisations supérieures, comprenant un premier piston (30a) apte à être déplacé en translation dans un premier cylindre (30b), ledit premier groupe de compression/détente de gaz étant couplé à un moteur électrique (51) et un générateur électrique (52), ledit premier groupe de compression/détente de gaz (30) pouvant fonctionner :

- soit en mode compression, ledit premier piston étant déplacé en translation par actionnement dudit moteur électrique alimenté par une énergie électrique à stocker ($E_1$) pour compresser dans ledit premier cylindre le gaz provenant de ladite extrémité supérieure ($2_1$) de la seconde enceinte et l'envoyer à ladite extrémité supérieure ($1_1$) de la première enceinte ,
- soit en mode détente ou « moteur thermodynamique » ledit premier piston étant déplacé en translation par expansion dans ledit premier cylindre du gaz provenant de ladite extrémité supérieure ($1_1$) de la première enceinte pour l'envoyer à ladite extrémité supérieure ($2_1$) de la seconde enceinte par ladite seconde canalisation supérieure (2d), le déplacement dudit premier piston (30a) permettant d'actionner ledit générateur électrique (52) et ainsi restituer de l'énergie électrique ($E_R$) et

D2) au moins un second groupe de compression/détente de gaz (40) intercalé entre les extrémités inférieures desdites première et seconde enceintes auxquelles il est relié par lesdites première et respectivement seconde canalisations inférieures (1c, 2c), comprenant un second piston (40a) apte à être déplacé en translation dans un second cylindre (40b), le déplacement dudit second piston étant couplé à celui dudit premier piston de sorte que ledit second groupe de compression/détente de gaz (40) est apte à fonctionner :

- soit en mode détente ou « moteur thermodynamique » quand ledit premier groupe de compression/détente fonctionne en mode compression, pour détendre le gaz provenant de ladite extrémité inférieure ($1_2$) de la première enceinte et l'envoyer à ladite extrémité inférieure ($2_2$) de la seconde enceinte,
- soit en mode compression quand ledit premier groupe de compression/détente fonctionne en mode détente, pour compresser le gaz provenant de ladite extrémité inférieure ($2_2$) de la seconde enceinte et l'envoyer à ladite extrémité inférieure ($1_2$) de la première enceinte, et

E) des premiers moyens de chauffage de gaz (5b) aptes à chauffer le gaz circulant dans une dite seconde canalisation supérieure (2d) entre l'extrémité supérieure de ladite seconde enceinte et ledit premier groupe de compression/détente (30), et, de préférence, des seconds moyens de chauffage de gaz (5a) aptes à chauffer du gaz à l'intérieure de ladite seconde enceinte, et

F) des moyens de refroidissement de gaz de préférence un échangeur thermique (6) aptes à refroidir du gaz circulant dans desdites premières canalisations inférieures (1c) entre l'extrémité inférieure ($1_2$) de la première enceinte et ledit second groupe de compression/détente (40).

2. Installation de stockage et restitution d'énergie selon la revendication 1, **caractérisée en ce que** lesdits premier et second pistons sont couplés mécaniquement à un même vilebrequin (53) apte à être actionné en rotation par ledit moteur électrique (51) et apte à actionner ledit générateur d'électricité, les déplacements desdits premier et second pistons étant de préférence calés à 180° en opposition de phase.

**3.** Installation de stockage et restitution d'énergie selon la revendication 2, **caractérisée en ce que** les deux premier et second cylindres (30b, 40b) comportent chacun au moins deux soupapes (31a-31b, 41a-41b) permettant l'admission et respectivement l'échappement de gaz desdits premier et second cylindres, les ouverture et fermeture desdites soupapes étant commandées en fonction de la position des pistons (30a, 40a) dans lesdits cylindres ou des valeurs de la pression du gaz dans les dits cylindres.

**4.** Installation de stockage et restitution d'énergie électrique selon l'une des revendication 1 à 3 **caractérisée en ce qu'**elle est remplie d'un gaz neutre, de préférence de l'argon.

**5.** Installation de stockage et restitution d'énergie électrique selon l'une des revendications 1 à 4 **caractérisée en ce que** :

- lesdits première enceinte et premier matériau réfractaire poreux sont capables de résister à une température $T1$ d'au moins 300°C, de préférence d'au moins 300 à 1000°C, de préférence encore de 400 à 600°C, et
- lesdites seconde enceinte et second matériau réfractaire poreux sont capables de résister à une température $T2$ d'au moins 100°C, de préférence d'au moins 100°C à 500°C, de préférence encore de 200 à 400°C.

**6.** Installation de stockage et restitution d'énergie électrique selon l'une des revendications 1 à 5 **caractérisée en ce que** ledit premier cylindre est plus volumineux que ledit second cylindre.

**7.** Installation de stockage et restitution d'énergie électrique selon l'une des revendications 1 à 6 **caractérisée en ce que** ledit premier cylindre est dimensionné pour compresser et respectivement détendre, et réchauffer et respectivement refroidir un gaz entre les dites températures $T1$ et $T2$, tandis que ledit second cylindre est dimensionné pour compresser et respectivement détendre et réchauffer et respectivement refroidir un gaz entre la température $T3$ de -50 à -20°C. et la température ambiante $T0$.

**8.** Installation de stockage et restitution d'énergie électrique selon l'une des revendications 1 à 7 **caractérisée en ce que** lesdits premier et second matériaux réfractaires poreux présentent une porosité de 20 à 60 %.

**9.** Installation de stockage et restitution d'énergie électrique selon la revendication 8 **caractérisée en ce que** lesdits premier et second matériaux réfractaires poreux sont constitués de briques poreuses (11) assemblées les unes contre les autres, de préférence traversées de perforations cylindriques ($11_1$) disposées parallèlement dans une même direction longitudinale que ladite enceinte dans laquelle elles sont assemblées, lesdites perforations étant de préférence encore de diamètre 5 à 20 mm.

**10.** Installation de stockage et restitution d'énergie électrique selon l'une des revendications 1 à 9 **caractérisée en ce que** lesdits premier et second matériaux réfractaires poreux sont constitués d'argile cuit à teneurs élevées en composés choisis parmi les magnésie, alumine et chaux.

**11.** Installation de stockage et restitution d'énergie électrique selon l'une des revendications 1 à 10 **caractérisée en ce que** ledit premier matériau réfractaire poreux est constitué d'argile de seconde cuisson ou chamotte.

**12.** Installation de stockage et restitution d'énergie électrique selon l'une des revendications 1 à 11 **caractérisée en ce que** ledit second matériau réfractaire poreux est constitué d'argile de première cuisson.

**13.** Installation de stockage et restitution d'énergie électrique selon l'une des revendications 1 à 12 **caractérisée en ce que** lesdites première et seconde enceinte ont un volume chacune d'au moins 500 $m^3$, de préférence de 1000 à 5000 $m^3$.

**14.** Installation de stockage et restitution d'énergie électrique selon l'une des revendications 1 à 13 **caractérisée en ce que** lesdites première et seconde enceinte sont constituées chacune d'une pluralité de colonnes verticales (70) en acier dont les extrémités supérieures (70a) et inférieures (70b) sont reliées à un même dite canalisation supérieure (1d,2d) et respectivement inférieure (1c,2c) par l'intermédiaire d'un collecteur supérieur (71a) et respectivement collecteur inférieur (71b).

**15.** Procédé de stockage d'énergie électrique (E1) sous forme d'énergie thermique dans lequel on utilise une installation selon l'une des revendications 1 à 14 **caractérisée en ce que**, après une étape initiale de préchauffage du gaz de ladite deuxième enceinte que l'on chauffe à température $T_2$, ladite installation étant remplie d'un gaz permanent, initialement à température ambiante $T_0$ on réalise les étapes successives dans lesquelles :

1) le gaz sortant de l'extrémité supérieure ($2_1$) de la seconde enceinte (2) à une température $T_2$ est chauffé à une température $T_1$ supérieure à une température $T_2$ par compression dans un dit premier groupe de compression/détente (30) fonctionnant en mode compression avant d'être envoyé à l'extrémité supérieure ($1_1$) de ladite première enceinte, dans laquelle il s'établit une pression P1 supérieure à la pression P2 de la deuxième enceinte, ledit premier groupe de compression (30) étant entraîné par ledit moteur électrique (51) alimenté par l'énergie électrique à stocker (E1), et

2) le gaz traverse de part en part ladite première enceinte entre ladite extrémité supérieure ($1_1$) et sa dite extrémité inférieure ($1_2$) et il ressort de ladite extrémité inférieure ($1_2$) de la première enceinte à une température ambiante T0 ou une température T'1 supérieure à T0 mais inférieure à T2, et

3) le gaz est ensuite refroidi le cas échéant à une température ambiante T0 grâce à desdits moyens de refroidissement de gaz (6) de préférence du type échangeur de chaleur, en aval de la sortie de l'extrémité inférieure ($1_2$) de la première enceinte, et

4) le gaz est ensuite détendu à travers un dit second groupe de compression/ détente (40) fonctionnant en mode détente, à ladite pression P2 de la seconde enceinte inférieure à la pression P1, le gaz se trouve ainsi refroidi à une température T3 inférieure à T0 avant d'entrer dans ladite seconde enceinte par son extrémité inférieure ($2_2$), et

5) on fait circuler le gaz à travers ladite seconde enceinte entre lesdites extrémités inférieure ($2_2$) et supérieure ($2_1$) de la deuxième enceinte, ce qui a pour effet d'augmenter le volume de matériau réfractaire de la partie inférieure (2b) de ladite seconde enceinte refroidie à la température T3, et de diminuer celui de sa partie supérieure (2a) à la température T2 ou T'2 inférieure à T2 mais supérieure à T0 et T'1, et si nécessaire, le cas échéant on réchauffe à la température T2 le gaz sortant de la seconde enceinte la température T'2 à l'aide de seconds moyens de chauffage de gaz (5b) et

6) on réitère les étapes 1) à 5) ci-dessus jusqu'à ce que la partie supérieure (1a) de la première enceinte réchauffée à la température T1 occupe au moins 80% du volume de ladite première enceinte, et que la partie inférieure (2b) de la seconde enceinte refroidie à la température T3 occupe au moins 80% du volume de la seconde enceinte.

16. Procédé selon la revendication 15 **caractérisé en ce que**, à l'étape 6), on interrompt le stockage de manière à ce que la partie inférieure (1b) de la première enceinte à ladite température T'1 représente au moins 10% du volume de la première enceinte, de préférence 10 à 20% du volume de la première enceinte, et/ou la partie supérieure (2a) de la seconde enceinte à la température (T2) représente moins de 20%, de préférence de 10 à 20% du volume de ladite seconde enceinte.

17. Procédé selon l'une des revendications 15 ou 16 **caractérisé en ce que** lesdites températures T1 et T2 sont telles que T1/T2=1,2 à 2 et T1/T0 est supérieur à 1,3, de préférence supérieur à 1,5 et de préférence encore inférieur à 2,5 et P1/P2 est de 2 à 4.

18. Procédé selon l'une des revendications 15 à 17 **caractérisé en ce que** T1 est de 300°C à 1000C, de préférence de 400 à 600°C, et T2 est de 100 à 500 °C, de préférence de 200 à 400°C.

19. Procédé selon la revendication 17 ou 18 **caractérisé en ce que** les pressions P1 est de 20 à 300 bar absolu (2MPa à 30 MPa)et P2 est de 10 à 100 bar absolu (1 à 10 MPa).

20. Procédé selon l'une des revendications 17 à 20 **caractérisé en ce que** T0 est de 10° à 40°C et T3 est de -50°C à -20°C, T1' étant le cas échéant de 20° à 100°C.

21. Procédé selon l'une des revendications 17 à 20 **caractérisé en ce que** l'on stocke une quantité d'énergie électrique de 20 MWh à 1000 MWh.

22. Procédé de restitution d'une énergie électrique ($E_R$) à partir d'une énergie thermique stockée par un procédé selon l'une des revendications 15 à 21 **caractérisé en ce que**, après une phase initiale de démarrage dans laquelle on actionne les dits premier et dit second groupe de compression (30,40) avec le dit moteur électrique (51), au cours de laquelle phase initiale on fait fonctionner les dits premier et second groupe en mode détente et respectivement compression de manière à établir un gradient de pression entre la pression P'1 de la première enceinte et une pression P'2 inférieure à P'1 de la deuxième enceinte, de préférence P'1 étant supérieur à P1 et P'2 étant inférieur à P2 ,on réalise les étapes successives dans lesquelles :

1) le gaz sortant par l'extrémité supérieure ($1_1$) de la première enceinte (1) à la dite température T1 est détendu et refroidi à la température T2 à travers le dit premier groupe de compression/détente fonctionnant en mode détente et actionnant ledit générateur d'électricité (52) permettant de délivrer une énergie électrique restituée($E_R$), et

2) le gaz traverse ladite deuxième enceinte depuis son extrémité supérieure ($2_1$) jusqu'à son extrémité inférieure ($2_2$), une partie supérieure (2a) de la deuxième enceinte étant réchauffée à ladite température T2, une partie inférieure (2b) de la deuxième enceinte restant à ladite température T3 et, et

3) le gaz sortant de l'extrémité inférieure ($2_2$) de ladite deuxième enceinte à son extrémité inférieure ($2_2$) à la température T3 est ensuite comprimé en passant par ledit second groupe de compression/détente fonctionnant en mode compression actionné par l'énergie libérée par ledit premier groupe de compression/détente fonctionnant en mode détente, de manière à le réchauffer à une température T4 supérieure à une température ambiante T0 et le cas échéant supérieur à T'1,mais inférieure à T2 en sortie dudit second groupe de compression/détente (40), et

4) de préférence, le gaz est ensuite refroidi à la température ambiante T0 ou T'1 grâce à des dits moyens de refroidissement (6) avant d'être introduit dans ladite première enceinte (1) par son extrémité inférieure ($1_2$) pour rejoindre la partie inférieure (1b) de ladite première enceinte qui se trouve à ladite température T'1, et

5) on fait circuler le gaz à travers ladite première enceinte, ce qui a pour effet d'augmenter le volume de matériau réfractaire de la partie inférieure (1b) à ladite température T'1 et de diminuer le volume de matériau réfractaire de la partie supérieure (1a) à ladite température chaude T1, et

6) on réitère les étapes 1) à 5) ci-dessus jusqu'à ce que la partie inférieure (1b) de la première enceinte à ladite température (T1) représente au moins 80% du volume de la première enceinte et la partie supérieure (2a) de ladite deuxième enceinte à ladite température (T2) représente au moins 80% en volume de ladite deuxième enceinte.

**23.** Procédé selon la revendication 22 **caractérisé en ce que**, à l'étape 6, on interrompt le procédé de restitution d'énergie de façon à ce qu'on maintienne une partie supérieure (1a) de la première enceinte à une dite température T1, ladite partie supérieure (1a) représentant moins de 20%, de préférence de 10 à 20%, en volume de ladite première enceinte, et/ou une partie inférieure (2b) de la deuxième enceinte à ladite température froide T3 représente moins de 20%, de préférence de 10 à 20%, de volume de la deuxième enceinte.

**24.** Procédé selon l'une des revendications. 22 ou 23 **caractérisé en ce que** le rendement de restitution d'énergie électrique par ledit générateur d'électricité (4a) $E_R/E_1$est supérieur à 60%, de préférence de 70 à 80%.

**25.** Procédé selon l'une des revendications 22à 24 **caractérisé en ce que** P'1/P'2 est de 2,2 à 5.

**26.** Procédé selon l'une des revendications 22 à 25 **caractérisé en ce que** T4 est de 30 à 100°C.

**27.** Procédé selon l'une des revendications 22 à 26 **caractérisé en ce que** la pression P'1 est de 60 à 400 bar absolu (6 à 40 MPa) et P'2 est de 15 à 90 bar absolu (1,5 à 9 MPa).

**Patentansprüche**

**1.** Anlage zur Speicherung und Freisetzung von Energie, **dadurch gekennzeichnet, dass** sie umfasst:

A) einen ersten wärmegedämmten Raum (1), der mit einem ersten porösen feuerfesten Material gefüllt und geeignet ist, von einem Gas durchströmt zu werden, das durch den ersten Raum zwischen 2 oberen und unteren Enden ($1_1$, $1_2$) des ersten Raums zirkuliert, und

B) einen zweiten wärmegedämmten Raum (2), der mit einem zweiten porösen feuerfesten Material gefüllt und geeignet ist, von einem Gas durchströmt zu werden, das durch den zweiten Raum zwischen 2 oberen und unteren Enden ($2_1$, $2_2$) des zweiten Raums zirkuliert, und

C) wärmegedämmte Kanalisationen (1c, 2c, 1d, 2d), die die Gaszirkulation im geschlossenen Kreislauf zwischen 2 Räumen ermöglichen, umfassend erste und zweite obere Kanalisationen (1d, 2d) zwischen den oberen Enden ($1_1$, $2_1$) der beiden Räume und ersten und zweite untere Kanalisationen (1c, 2c) zwischen den unteren Enden ($1_2$, $2_2$) der beiden Räume, und

D) eine Gas-Kompressions- und Expansionseinheit (50), umfassend:

D1) mindestens eine erste Gas-Kompressions-/Expansionsgruppe (30), die zwischen den oberen Enden

($1_1$, $2_1$) der ersten und zweiten Räume (1, 2) zwischengefügt ist, mit denen sie durch erste bzw. zweite obere Kanalisationen verbunden ist, umfassend einen ersten Kolben (30a), der geeignet ist, in Translation in einem ersten Zylinder (30b) verschoben zu werden, wobei die Gas-Kompressions-/Expansionsgruppe mit einem Elektromotor (51) und einem Elektrogenerator (52) gekoppelt ist, wobei die erste Gas-Kompressions-/Expansionsgruppe (30) funktionierten kann:

- entweder im Kompressionsmodus, wobei der erste Kolben in Translation durch Betätigung des Elektromotors, der mit zu speichernder elektrischer Energie ($E_1$) versorgt wird, verschoben wird, um in dem ersten Zylinder das von dem oberen Ende ($2_1$) des zweiten Raum kommende Gas zu komprimieren und es an das obere Ende ($1_1$) des ersten Raums zu schicken,
- oder im Expansionsmodus oder als "thermodynamischer Motor", wobei der erste Kolben in Translation durch Expansion des von dem oberen Ende ($1_1$) des ersten Raum kommenden Gases in dem ersten Zylinder verschoben wird, um es zu dem oberen Ende ($2_1$) des zweiten Raums durch die zweite obere Kanalisation (2d) zu schicken, wobei es die Verschiebung des ersten Kolbens (30a) ermöglicht, den Elektrogenerator (52) zu betätigen und auf diese Weise elektrische Energie ($E_R$) freizusetzen, und

D2) mindestens eine zweite Gas-Kompressions-/Expansionsgruppe (40), die zwischen den unteren Enden der ersten und zweiten Räume zwischengefügt ist, mit denen sie durch erste bzw. zweite untere Kanalisationen (1c, 2c) verbunden ist, umfassend einen zweiten Kolben (40a), der geeignet ist, in Translation in einem zweiten Zylinder (40b) verschoben zu werden, wobei die Verschiebung des zweiten Kolbens mit jener des ersten Kolbens gekoppelt ist, so dass die zweite Gas-Kompressions-/Expansionsgruppe (40) funktionierten kann:

- entweder im Expansionsmodus oder als "thermodynamischer Motor", wenn die erste Gas-Kompressions-/Expansionsgruppe im Kompressionsmodus funktioniert, um das von dem unteren Ende ($1_2$) des ersten Raums kommende Gas zu expandieren und es zu dem unteren Ende ($2_2$) des zweiten Raums zu schicken,
- oder im Kompressionsmodus, wenn die erste Gas-Kompressions-/Expansionsgruppe im Expansionsmodus funktioniert, um das von dem unteren Ende ($2_2$) des zweiten Raums kommende Gas zu komprimieren und es zu dem unteren Ende ($1_2$) des ersten Raums zu schicken, und

E) erste Gaserhitzungsmittel (5b), die geeignet sind, das in einer zweiten oberen Kanalisation (2d) zwischen dem oberen Ende des zweiten Raums und der ersten Kompressions-/Expansionsgruppe (30) zirkulierende Gas zu erhitzen, und vorzugsweise zweite Gaserhitzungsmittel (5a), die geeignet sind, Gas im Inneren des zweiten Raums zu erhitzen, und

F) Gaskühlmittel, vorzugsweise ein Wärmetauscher (6), die geeignet sind, in ersten unteren Kanalisationen (1c) zwischen dem unteren Ende ($1_2$) des ersten Raums und der Kompressions-/Expansionsgruppe (40) zirkulierendes Gas zu kühlen.

2. Anlage zur Speicherung und Freisetzung von Energie gemäß Anspruch 1, **dadurch gekennzeichnet, dass** die ersten und zweiten Kolben mechanisch mit einer selben Kurbelwelle (53) gekoppelt sind, die geeignet ist, in Drehung von dem Elektromotor (51) betätigt zu werden, und die geeignet ist, den Elektrizitätsgenerator zu betätigen, wobei die Verschiebungen der ersten und zweiten Kolben vorzugsweise bei 180° in Gegenphase festgestellt werden.

3. Anlage zur Speicherung und Freisetzung von Energie gemäß Anspruch 2, **dadurch gekennzeichnet, dass** die beiden ersten und zweiten Zylinder (30b, 40b) jeweils mindestens zwei Ventile (31 a-31 b, 41 a-41 b) umfassen, die das Einlassen bzw. das Auslassen von Gas aus den ersten und zweiten Zylindern ermöglichen, wobei das Öffnen und Schließen der Ventile in Abhängigkeit von der Position der Kolben (30a, 40a) in den Zylindern oder den Werten des Drucks des Gases in den Zylindern gesteuert werden.

4. Anlage zur Speicherung und Freisetzung von elektrischer Energie gemäß einem der Ansprüche 1 bis 3, **dadurch gekennzeichnet, dass** sie mit einem Neutralgas, vorzugsweise Argon, gefüllt ist.

5. Anlage zur Speicherung und Freisetzung von elektrischer Energie gemäß einem der Ansprüche 1 bis 4, **dadurch gekennzeichnet, dass**:

- der erste Raum und das erste poröse feuerfeste Material geeignet sind, einer Temperatur T1 von mindestens 300 °C, vorzugsweise mindestens 300 bis 1000 °C, noch bevorzugter von 400 bis 600 °C, standzuhalten, und

- der zweite Raum und das zweite poröse feuerfeste Material geeignet sind, einer Temperatur T2 von mindestens 100 °C, vorzugsweise mindestens 100 bis 500 °C, noch bevorzugter von 200 bis 400 °C, standzuhalten.

6. Anlage zur Speicherung und Freisetzung von elektrischer Energie gemäß einem der Ansprüche 1 bis 5, **dadurch gekennzeichnet, dass** der erste Zylinder voluminöser als der zweite Zylinder ist.

7. Anlage zur Speicherung und Freisetzung von elektrischer Energie gemäß einem der Ansprüche 1 bis 6, **dadurch gekennzeichnet, dass** der erste Zylinder derart dimensioniert ist, dass er ein Gas komprimiert bzw. expandiert und zwischen den Temperaturen T1 und T2 erhitzt bzw. kühlt, während der zweite Zylinder derart dimensioniert ist, dass er ein Gas komprimiert bzw. expandiert und zwischen der Temperatur T3 von -50°C bis -20 °C und der Raumtemperatur T0 erhitzt oder kühlt.

8. Anlage zur Speicherung und Freisetzung von elektrischer Energie gemäß einem der Ansprüche 1 bis 7, **dadurch gekennzeichnet, dass** die ersten und zweiten porösen feuerfesten Materialien eine Porosität von 20 bis 60 % aufweisen.

9. Anlage zur Speicherung und Freisetzung von elektrischer Energie gemäß Anspruch 8, **dadurch gekennzeichnet, dass** die ersten und zweiten porösen feuerfesten Materialien von porösen Ziegeln (11) gebildet sind, die zusammengefügt sind, vorzugsweise zylindrische Perforationen ($11_1$) aufweisen, die parallel in einer selben Längsrichtung wie der Raum, in dem sie zusammengefügt sind, angeordnet sind, wobei die Perforationen vorzugsweise noch einen Durchmesser von 5 bis 20 mm aufweisen.

10. Anlage zur Speicherung und Freisetzung von elektrischer Energie gemäß einem der Ansprüche 1 bis 9, **dadurch gekennzeichnet, dass** die ersten und zweiten porösen feuerfesten Materialien aus gebranntem Ton mit hohem Gehalt von Verbindungen, die unter Magnesiumoxid, Aluminiumoxid und Kalk ausgewählt sind, bestehen.

11. Anlage zur Speicherung und Freisetzung von elektrischer Energie gemäß einem der Ansprüche 1 bis 10, **dadurch gekennzeichnet, dass** das erste poröse feuerfeste Material von Ton aus einem zweiten Brennvorgang oder Schamotte gebildet ist.

12. Anlage zur Speicherung und Freisetzung von elektrischer Energie gemäß einem der Ansprüche 1 bis 11, **dadurch gekennzeichnet, dass** das zweite poröse feuerfeste Material von Ton aus einem ersten Brennvorgang gebildet ist.

13. Anlage zur Speicherung und Freisetzung von elektrischer Energie gemäß einem der Ansprüche 1 bis 12, **dadurch gekennzeichnet, dass** der ersten und zweite Raum jeweils ein Volumen von mindestens 500 $m^3$, vorzugsweise von 1000 bis 5000 $m^3$, haben.

14. Anlage zur Speicherung und Freisetzung von elektrischer Energie gemäß einem der Ansprüche 1 bis 13, **dadurch gekennzeichnet, dass** der erste und zweite Raum jeweils von einer Vielzahl von vertikalen Stahlsäulen (70) gebildet sind, deren obere (70a) und untere Enden (70b) mit einer selben oberen (1 d, 2d) bzw. unteren Kanalisation (1 c, 2c) unter Vermittlung eines oberen (71 a) bzw. eines unteren Kollektors (71 b) verbunden sind.

15. Verfahren zur Speicherung von elektrischer Energie (E1) in Form von Wärmeenergie, bei dem eine Anlage gemäß einem der Ansprüche 1 bis 14 verwendet wird, **dadurch gekennzeichnet, dass** nach einen anfänglichen Schritt des Vorheizens des Gases des zweiten Raums, das auf eine Temperatur $T_2$ erhitzt wird, wobei die Anlage mit einem Permanentgas gefüllt ist, das anfänglich auf Raumtemperatur $T_0$ ist, nacheinander die folgenden Schritte ausgeführt werden, bei denen:

   1) das aus dem oberen Ende ($2_1$) des zweiten Raums (2) mit einer Temperatur $T_2$ auf eine Temperatur $T_1$, die höher als die Temperatur $T_2$ ist, durch Kompression in einer ersten Kompressions-/Expansionsgruppe (30), die im Kompressionsmodus funktioniert, erhitzt wird, bevor es zum oberen Ende ($1_1$) des ersten Raums geschickt wird, in dem sich ein Druck P1 größer als der Druck P2 des zweiten Raums einstellt, wobei die erste Kompressionsgruppe (30) vom Elektromotor (51), der mit der zu speichernden elektrischen Energie (E1) versorgt wird, angetrieben wird, und

   2) das Gas den ersten Raum zwischen dem oberen Ende ($1_1$) und seinem unteren Ende ($1_2$) durchquert und aus dem unteren Ende ($1_2$) des ersten Raums mit einer Raumtemperatur T0 oder einer Temperatur T'1 höher als T0, aber niedriger als T2, wieder austritt, und

   3) das Gas dann gegebenenfalls auf eine Raumtemperatur T0 mit Hilfe der Gasabkühlungsmittel (6), vorzugsweise vom Typ Wärmetauscher, stromabwärts zum Ausgang des unteren Endes ($1_2$) des ersten Raums gekühlt wird, und

4) das Gas sodann durch eine zweite Kompressions-/Expansionsgruppe (40), die im Expansionsmodus funktioniert, auf den Druck P2 des zweiten Raums, der kleiner als der Druck P1 ist, expandiert wird, wobei das Gas somit auf eine Temperatur T3 niedriger als T0 gekühlt wird, bevor es in den zweiten Raum über sein unteres Ende ($2_2$) eintritt, und

5) das Gas durch den zweiten Raum zwischen den unteren ($2_2$) und oberen Enden ($2_1$) des zweiten Raums zum Zirkulieren gebracht wird, was bewirkt, dass das Volumen an feuerfestem Material des unteren Teils (2b) des zweiten Raums, der auf die Temperatur T3 gekühlt wurde, erhöht und jenes seines oberen Teils (2a) auf die Temperatur T2 oder T'2, niedriger als T2 aber höher als T0 und T'1 verringert wird, und falls erforderlich das aus dem zweiten Raum mit der Temperatur T'2 austretende Gas gegebenenfalls mit Hilfe von zweiten Gaserhitzungsmitteln (5b) auf die Temperatur T2 erhitzt wird, und

6) die oben angeführten Schritte 1) bis 5) reiteriert werden, bis der obere Teil (1a) des ersten Raums, der auf die Temperatur T1 erhitzt ist, mindestens 80 % des Volumens des ersten Raums einnimmt, und der untere Teil (2b) des zweiten Raums, der auf die Temperatur T3 gekühlt ist, mindesten 80 % des Volumens des zweiten Raums einnimmt.

16. Verfahren gemäß Anspruch 15, **dadurch gekennzeichnet, dass** in Schritt 6) die Speicherung unterbrochen wird, so dass der untere Teil (1b) des ersten Raums mit der Temperatur T'1 mindestens 10 % des Volumens des ersten Raums, vorzugsweise 10 bis 20 % des Volumens des ersten Raums, darstellt, und/oder der obere Teil (2a) des zweiten Raums mit der Temperatur (T2) weniger als 20 %, vorzugsweise 10 bis 20 % des Volumens des zweiten Raums darstellt.

17. Verfahren gemäß einem der Ansprüche 15 oder 16, **dadurch gekennzeichnet**, die Temperaturen T1 und T2 derart sind, dass T1/T2 = 1,2 bis 2 und T1/T0 größer als 1,3, vorzugsweise größer als 1,5 und besonders bevorzugt kleiner als 2,5, und P1/P2 2 bis 4 ist.

18. Verfahren gemäß einem der Ansprüche 15 bis 17, **dadurch gekennzeichnet, dass** T1 300 °C bis 1000 °C, vorzugsweise 400 bis 600 °C, und T2 100 bis 500 °C, vorzugsweise 200 bis 400 °C, ist.

19. Verfahren gemäß Anspruch 17 oder 18, **dadurch gekennzeichnet, dass** der Druck P1 20 bis 300 bar absolut (2 MPa bis 30 MPa) und P2 10 bis 100 bar absolut (1 bis 10 MPa) ist.

20. Verfahren gemäß einem der Ansprüche 17 bis 20, **dadurch gekennzeichnet, dass** T0 10 bis 40 °C und T3 -50 bis -20 °C beträgt, wobei T1' gegebenenfalls 20 bis 100 °C beträgt.

21. Verfahren gemäß einem der Ansprüche 17 bis 20, **dadurch gekennzeichnet, dass** eine Menge an elektrischer Energie von 20 MWh bis 1000 MWh gespeichert wird.

22. Verfahren zur Freisetzung von elektrischer Energie ($E_R$) aus Wärmeenergie, die durch ein Verfahren gemäß einem der Ansprüche 15 bis 21 gespeichert wurde, **dadurch gekennzeichnet, dass** nach einer anfänglichen Startphase, während der die ersten und zweiten Kompressionsgruppen (30, 40) mit dem Elektromotor (51) gestartet werden, wobei während dieser Startphase die erste und die zweite Gruppe im Expansionsmodus bzw. im Kompressionsmodus betrieben werden, um einen Druckgradienten zwischen dem Druck P'1 des ersten Raums und dem Druck P'2 kleiner als P'1 des zweiten Raums zu erstellen, wobei vorzugsweise P'1 größer als P1 und P'2 kleiner als P2 ist, nacheinander die folgenden Schritte durchgeführt werden, bei denen:

1) das aus dem oberen Ende ($1_1$) des ersten Raums (1) mit der Temperatur T1 austretende Gas durch die erste Kompressions-/Expansionsgruppe, die im Expansionsmodus funktioniert, expandiert und auf die Temperatur T2 gekühlt wird, wobei der Elektrizitätsgenerator (52) betätigt wird, der es ermöglicht, freigesetzte elektrische Energie ($E_R$) zu liefern, und

2) das Gas den zweiten Raum von seinem oberen Ende ($2_1$) bis zu seinem unteren Ende ($2_2$) durchquert, wobei ein oberer Teil (2a) des zweiten Raums auf die Temperatur T2 erhitzt wird, wobei ein unterer Teil (2b) des zweiten Raums auf der Temperatur T3 bleibt, und

3) das aus dem unteren Ende ($2_2$) des zweiten Raums an seinem unteren Ende ($2_2$) mit der Temperatur T3 austretende Gas sodann komprimiert wird, wobei es durch die zweite Kompressions-/Expansionsgruppe strömt, die im Kompressionsmodus funktioniert und von der Energie betätigt wird, die durch die erste Kompressions-/Expansionsgruppe freigesetzt wird, die im Expansionsmodus funktioniert, um es auf eine Temperatur T4 höher als eine Raumtemperatur T0 und gegebenenfalls höher als T'1, aber niedriger als T2 am Ausgang der zweiten Kompressions-/Expansionsgruppe (40) zu erhitzen, und

4) vorzugsweise das Gas sodann auf die Raumtemperatur T0 oder T'1 dank der Kühlmittel (6) gekühlt wird, bevor es in den ersten Raum (1) durch sein unteres Ende ($1_2$) eingeleitet wird, um zu dem unteren Teil (1 b) des ersten Raums, der die Temperatur T'1 aufweist, zu gelangen, und

5) das Gas durch den ersten Raum zirkulieren zu lassen, was eine Erhöhung des Volumens an feuerfestem Material des unteren Teils (1 b) auf Raumtemperatur T'1 und einer Verringerung des Volumens an feuerfestem Material des oberen Teils (1a) auf die heiße Temperatur T1 bewirkt, und

6) die oben erwähnten Schritte 1) bis 5) reiteriert werden, bis der untere Teil (1 b) des ersten Raums mit der Temperatur (T1) mindestens 80 % des Volumens des ersten Raums darstellt, und der obere Teil (2a) des zweiten Raums mit der Temperatur (T2) mindestens 80 % des Volumens des zweiten Raums darstellt.

23. Verfahren gemäß Anspruch 22, **dadurch gekennzeichnet, dass** in Schritt 6 das Verfahren zur Freisetzung von Energie unterbrochen wird, so dass ein oberer Teil (1a) des ersten Raums auf einer Temperatur T1 gehalten wird, wobei der obere Teil (1 a) weniger als 20 %, vorzugsweise 10 bis 20 % des Volumens des ersten Raums darstellt, und/oder ein unterer Teil (2b) des zweiten Raums mit der kalten Temperatur T3 weniger als 20 %, vorzugsweise 10 bis 20 %, des Volumens des zweiten Raums darstellt.

24. Verfahren gemäß einem der Ansprüche 22 oder 23, **dadurch gekennzeichnet, dass** die Freisetzungsleistung an elektrischer Energie durch den Elektrizitätsgenerator (4a) $E_R/E_1$ größer als 60 %, vorzugsweise 70 bis 80 %, ist.

25. Verfahren gemäß einem der Ansprüche 22 bis 24, **dadurch gekennzeichnet, dass** P'1/P'2 2,2 bis 5 ist.

26. Verfahren gemäß einem der Ansprüche 22 bis 25, **dadurch gekennzeichnet, dass** T4 30 bis 100 °C ist.

27. Verfahren gemäß einem der Ansprüche 22 bis 26, **dadurch gekennzeichnet, dass** der Druck P'1 60 bis 400 bar absolut (6 bis 40 MPa) und P'2 15 bis 90 bar absolut (1,5 bis 9 MPa) ist.

**Claims**

1. An installation for storing and returning energy, the installation being **characterized in that** it comprises:

A) a first lagged enclosure (1) filled with a first porous refractory material suitable for passing a gas flowing through said first enclosure between top and bottom ends ($1_1$, $1_2$) of said first enclosure; and

B) a second lagged enclosure (2) filled with a second porous refractory material suitable for passing a gas flowing through said second enclosure between top and bottom ends ($2_1$, $2_2$) of said second enclosure; and

C) lagged pipes (1c, 2c, 1d, 2d) enabling the gas to flow in a closed circuit between the two enclosures, the pipes comprising first and second top pipes (1d, 2d) between the top ends ($1_1$, $2_1$) of the two enclosures and first and second bottom pipes (1c, 2c) between the bottom ends ($1_2$, $2_2$) of the two enclosures; and

D) a gas compression and expansion unit (50) comprising:

D1) at least one first gas compression/expansion group (30) interposed between the top ends ($1_1$, $2_1$) of said first and second enclosures (1, 2) to which it is connected by the first and second top pipes respectively, the group comprising a first piston (30a) suitable for being moved in translation in a first cylinder (30b), said first gas compression/expansion group being coupled to an electric motor (51) and an electricity generator (52), said first gas compression/expansion group (30) being capable of operating:

• either in compression mode, said first piston being moved in translation under drive from said electric motor powered by electrical energy for storage (E1) so as to compress in said first cylinder the gas coming from said top end ($2_1$) of the second cylinder and send it to said top end ($1_1$) of the first enclosure;
• or else in expansion or "thermodynamic engine" mode, said piston being moved in translation by expansion in said first cylinder of the gas coming from said top end ($1_1$) of the first enclosure to be sent to said top end ($2_1$) of the second enclosure via said second top pipe (2d), the movement of said first piston (30a) serving to drive said electricity generator (52) and thus return the electrical energy ($E_R$); and

D2) at least one second gas compression/expansion group (40) interposed between the bottom ends of said first and second enclosures to which it is connected by said first and second bottom pipes (1c, 2c) respectively, the group comprising a second piston (40a) suitable for being moved in translation in a second cylinder (40b), the movement of said second piston being coupled to the movement of said first piston in such a manner that said second gas compression/expansion group (40) is suitable for operating:

- either in expansion or "thermodynamic engine" mode when said first compression/expansion group is operating in compression mode, in order to expand the gas coming from said bottom end $(1_2)$ of the first enclosure and sending it to said bottom end $(2_2)$ of the second enclosure;
- or else in compression mode when said first compression/expansion group is operating in expansion mode, to compress the gas coming from said bottom end $(2_2)$ of the second enclosure and sending it to said bottom end $(1_2)$ of the first enclosure; and

E) first gas heater means (5b) suitable for heating the gas flowing in a said second top pipe (2d) between the top end of said second enclosure and said first compression/expansion group (30), and preferably second gas heater means (5a) suitable for heating the gas inside said second enclosure; and

F) gas cooler means, preferably a heat exchanger (6), suitable for cooling the gas flowing in said first bottom pipe (1c) between the bottom end $(1_2)$ of the first enclosure and said second compression/expansion group (40).

2. An energy storage and return installation according to claim 1, **characterized in that** said first and second pistons are mechanically coupled to a common crank shaft (53) suitable for being driven in rotation by said electric motor (51) and suitable for driving said electricity generator, the movements of said first and second pistons preferably being set to be in phase opposition at 180°C.

3. An energy storage and return installation according to claim 2, **characterized in that** each of the first and second cylinders (30b, 40b) includes at least two valves (31a-31b, 41a-41b) respectively enabling gas to be admitted to and exhausted from said first and second cylinders, the opening and closing of said valves being controlled as a function of the positions of the pistons (30a, 40a) in said cylinders or as a function of the values of gas pressure in said cylinders.

4. An electrical energy storage and return installation according to any one of claims 1 to 3, **characterized in that** it is filled with an inert gas, preferably argon.

5. An electrical energy storage and return installation according to any one of claims 1 to 4, **characterized in that**:

- said first enclosure and first porous refractory material are capable of withstanding a temperature T1 of at least 300°C, preferably of at least 300°C to 1000°C, more preferably of 400°C to 600°C; and
- said second enclosure and second porous refractory material are capable of withstanding a temperature T2 of at least 100°C, preferably of at least 100°C to 500°C, more preferably of 200°C to 400°C.

6. An electrical energy storage and return installation according to any one of claims 1 to 5, **characterized in that** said first cylinder is of greater volume than said second cylinder.

7. An electrical energy storage and return installation according to any one of claims 1 to 6, **characterized in that** said first cylinder is dimensioned to compress and to expand respectively, and to heat and to cool respectively a gas between said temperatures T1 and T2, while said second cylinder is dimensioned to compress and to expand respectively and to heat and to cool respectively a gas between a temperature T3 lying in the range -50°C to -20°C and ambient temperature T0.

8. An installation for storing and returning energy according to any one of claims 1 to 7, **characterized in that** said first and second porous refractory materials present porosities lying in the range 20% to 60%.

9. An installation for storing and returning energy according to claim 8, **characterized in that** said first and second porous refractory materials are constituted by porous bricks (11) assembled one against another, preferably having cylindrical perforations $(11_1)$ passing therethrough that are disposed parallel in a common longitudinal direction that is the longitudinal direction of the enclosure in which they are assembled, said perforations more preferably being of a diameter in the range 5 mm to 20 mm.

10. An installation for storing and returning energy according to any one of claims 1 to 9, **characterized in that** said first and second porous refractory materials are constituted by fire clay having high contents of compounds selected from magnesia, alumina, and lime.

11. An installation for storing and returning energy according to any one of claims 1 to 10, **characterized in that** said first porous refractory material is constituted by second-firing fire clay or chamotte.

12. An installation for storing and returning energy according to any one of claims 1 to 11, **characterized in that** said second porous refractory material is constituted by first-firing fire clay.

13. An installation for storing and returning energy according to any one of claims 1 to 12, **characterized in that** said first and second enclosures have respective volumes of not less than 500 $m^3$, and preferably lying in the range 1000 $m^3$ to 5000 $m^3$.

14. An electrical energy storage and return installation according to any one of claims 1 to 13, **characterized in that** each of said first and second enclosures is constituted by a plurality of vertical steel columns (70) having their top ends (70a) and bottom ends (70b) respectively connected to a common said top pipe (1d, 2d) and a common said bottom pipe (1c, 2c) via a top manifold (71a) and a bottom manifold (71b) respectively.

15. A method of storing electrical energy (E1) in the form of heat energy, in which an installation according to any one of claims 1 to 14 is used, the method being **characterized in that**, after an initial step of preheating the gas of said second enclosure that is heated to a temperature $T_2$, said installation being filled with a permanent gas that is initially at ambient temperature $T_0$, the following successive steps are performed:

> 1) the gas leaving the top end ($2_1$) of the second enclosure (2) at a temperature $T_2$ is heated to a temperature $T_1$ higher than a temperature $T_2$ by being compressed in a said first compression/expansion group (30) operating in compressor mode before being delivered to the top end ($1_1$) of said first enclosure, in which a pressure P1 is established higher than the pressure P2 of the second enclosure, said first compression group (30) being driven by said electric motor (51) powered by the electrical energy (E1) that is to be stored; and
> 2) the gas passes right through said first enclosure between said top end ($1_1$) and its said bottom end ($1_2$). and it leaves said bottom end ($1_2$) of the first enclosure at an ambient temperature T0 or a temperature T'1 greater than T0 but less than T2; and
> 3) the gas is then cooled, where appropriate, to an ambient temperature T0 by said gas cooler means (6), preferably of the heat exchanger type, located downstream from the outlet from the bottom end ($1_2$) of the first enclosure; and
> 4) the gas is then expanded through a said second compression/expansion group (40) operating in expansion mode, to said pressure P2 of the second enclosure that is lower than the pressure P1, the gas thus being cooled to a temperature T3 lower than T0 prior to entering into said second enclosure via its bottom end ($2_2$); and
> 5) the gas is caused to flow through said second enclosure between said bottom and top ends ($2_2$, $2_1$) of the second enclosure, thereby having the effect of increasing the volume of the refractory material in the bottom portion (2b) of said second enclosure that is cooled to the temperature T3, and of decreasing the volume of its top portion (2a) that is at the temperature T2 or T'2 lower than T2 but greater than T0 and T'1, and if necessary, where appropriate, the gas leaving the end of the second enclosure at the temperature T2 is heated to the temperature T'2 with the help of second gas heater means (5b); and
> 6) above steps 1) to 5) are repeated until the top portion (1a) of the first enclosure heated to the temperature T1 occupies at least 80% of the volume of said first enclosure, and the bottom portion (2b) of the second enclosure cools to a temperature T3 occupying at least 80% of the volume of the second enclosure.

16. A method according to claim 15, **characterized in that**, in step 6), storage is interrupted so that the bottom portion (1b) of the first enclosure at said temperature T'1 represents at least 10% of the volume of the first enclosure, preferably 10% to 20% of the volume of the first enclosure, and/or the top portion (2a) of the second enclosure at the temperature (T2) represents less than 20%, preferably 10% to 20% of the volume of said second enclosure.

17. A method according to claim 15 or claim 17, **characterized in that** said temperatures T1 and T2 are such that T1/T2 = 1.2 to 2 and T1/T0 is greater than 1.3, preferably greater than 1.5, and more preferably less than 2.5, and P1/P2 lies in the range 2 to 4.

18. A method according to any one of claims 15 to 17, **characterized in that** T1 is 300°C to 1000°C, preferably 400°C to 600°C, and T2 is 100°C to 500°C, preferably 200°C to 400°C.

**19.** A method according to claim 17 or claim 18, **characterized in that** the pressure P1 lies in the range 20 to 300 bars absolute (2 MPa to 30 MPa), and the pressure P2 lies in the range 10 to 100 bars absolute (1 MPa to 10 PMa).

**20.** A method according to any one of claims 17 to 19, **characterized in that** T0 lies in the range 10°C to 40°C and T3 lies in the range -50°C to -20°C, T1' lying in the range 20°C to 100°C, where appropriate.

**21.** A method according to any of claims 17 to 20, **characterized in that** the quantity of electrical energy stored lies in the range 20 MWh to 1000 MWh.

**22.** A method of returning electrical energy ($E_R$) from heat energy stored by a method according to any one of claims 15 to 21, the method being **characterized in that**, after an initial starting stage in which said first and second compression groups (30, 40) are driven by the said electric motor (51), during which initial stage said first and second groups are caused to operate respectively in expansion mode and in compression mode in such a manner as to establish a pressure gradient between the pressure P'1 in the first enclosure and a pressure P'2 less P'1 in the second enclosure, P'1 preferably being greater than P1 and P'2 preferably being less than P2, the following successive steps are performed:

1) the gas leaving via the top end ($1_1$) of the first enclosure (1) at said temperature T1 is expanded and cooled to the temperature T2 through said first expansion/compression group operating in expansion mode and driving said electricity generator (52) enabling returned electrical energy ($E_R$) to be delivered; and
2) the gas passes through said second enclosure from its top end ($2_1$) to its bottom end ($2_2$), a top portion (2a) of the second enclosure being heated to said temperature T2, a bottom portion (2b) of the second enclosure remaining at said temperature T3; and
3) the gas leaving the bottom end ($2_2$) of said second enclosure at the temperature T3 is then compressed by passing through said second compression/expansion group operating in compression mode that is driven by the energy released by said first compression/expansion group operating in expansion mode so as to be heated to a temperature T4 greater than an ambient temperature T0 and where appropriate greater than T'1, but less than T2, at the outlet from said second compression/expansion group (40); and
4) preferably, the gas is then cooled to the ambient temperature T0 or T'1 by said cooler means (6) prior to being introduced into said first enclosure (1) by its bottom end ($1_2$) to enter the bottom portion (1b) of said first enclosure which is at said temperature T'1; and
5) the gas is caused to flow through said first enclosure, thereby having the effect of increasing the volume of refractory material in the bottom portion (1b) that is at said temperature T'1 and of decreasing the volume of refractory material in the top portion (1a) that is at said hot temperature T1; and
6) above steps 1) to 5) are repeated until the bottom portion (1b) of the first enclosure at said temperature (T1) represents at least 80% of the volume of the first enclosure, and the top portion (2a) of said second enclosure at said temperature (T2) represents at least 80% of the volume of said second enclosure.

**23.** A method according to claim 22, **characterized in that**, in step 6), the energy return method is interrupted so as to maintain a top portion (1a) of the first enclosure at a said temperature T1, said top portion (1a) representing less than 20%, preferably 10% to 20% of the volume of said first enclosure, and/or a bottom portion (2b) of the second enclosure at said cold temperature T3 represents less than 20%, preferably 10% to 20%, of the volume of the second enclosure.

**24.** A method according to claim 22 or claim 23, **characterized in that** the efficiency $E_R/E_1$ with which electrical energy is returned by said electricity generator (4a) is greater than 60%, and preferably lies in the range 70% to 80%.

**25.** A method according to any one of claims 22 to 24, **characterized in that** the ratio P'1/P'2 lies in the range 2.2 to 5.

**26.** A method according to any one of claims 22 to 25, **characterized in that** T4 lies in the range 30°C to 100°C.

**27.** A method according to any one of claims 22 to 26, **characterized in that** the pressure P'1 lies in the range 60 to 400 bars absolute (6 MPa to 40 MPa) and P'2 lies in the range 15 to 90 bars absolute (1.5 MPa to 9 MPa).

FIG.1A

EP 2 203 967 B1

FIG.1B

EP 2 203 967 B1

EP 2 203 967 B1

FIG.2A

FIG.2B

FIG.2C

FIG.2D

33

FIG.3

FIG.3A

FIG.3B

EP 2 203 967 B1

# FIG.4

# FIG.5

# FIG.6

FIG.7

FIG.7A

FIG.7B

FIG.8A

FIG.8B

**EP 2 203 967 B1**

## RÉFÉRENCES CITÉES DANS LA DESCRIPTION

**Documents brevets cités dans la description**

- WO 2005108758 A